# EUROPEAN PATENT APPLICATION

(11) **EP 4 485 825 A1**
(43) Date of publication of application: **01.01.2025**
(21) Application number: 23787456.5
(22) Date of filing: 14.03.2023
(51) Int. Cl.: H04L 1/00, H04L 1/18

(54) **CODING METHOD AND APPARATUS**

(30) Priority: 15.04.2022 CN 202210397609
(71) Applicant: Huawei Technologies Co., Ltd., Shenzhen, Guangdong 518129 (CN)
(72) Inventor: LI, Jiahui, Shenzhen, Guangdong 518129 (CN); MA, Mengyao, Shenzhen, Guangdong 518129 (CN); GU, Jiaqi, Shenzhen, Guangdong 518129 (CN); LIN, Wei, Shenzhen, Guangdong 518129 (CN); TANG, Zihan, Shenzhen, Guangdong 518129 (CN); YAN, Min, Shenzhen, Guangdong 518129 (CN)
(74) Representative: Isarpatent
(86) International application number: PCT/CN2023/081390
(87) International publication number: WO 2023/197808

(57) **Abstract**

This application provides a coding method and an apparatus, to effectively use a probability distribution feature of to-be-coded source bits, and improve transmission performance. In the method, a sending device may determine a mother code in a k^{th} transmission based on a length of to-be-transmitted bits in the k^{th} transmission, k is an integer greater than or equal to 2. The sending device may perform systematic polar encoding on to-be-coded bits in the k^{th} transmission based on the mother code, to obtain the to-be-transmitted bits. The sending device may send the to-be-transmitted bits. Based on the solution, bits in a retransmission phase are encoded through systematic polar encoding, so that a probability distribution feature of to-be-coded source bits is effectively used, and retransmission performance is improved.

## Description

### CROSS-REFERENCE TO RELATED APPLICATIONS

This application claims priority to Chinese Patent Application No. 202210397609.1, filed with the China National Intellectual Property Administration on April 15, 2022 and entitled "CODING METHOD AND APPARATUS", which is incorporated herein by reference in its entirety.

### TECHNICAL FIELD

This application relates to the field of wireless communication technologies, and in particular, to a coding method and an apparatus.

### BACKGROUND

In the field of communication technologies, a communication device (for example, a terminal device or a base station) may perform channel coding by using a polar code (polar code). Currently, polar coding gradually becomes a mainstream coding scheme. A sending device may perform polar code encoding on information bits. The sending device punctures or shortens encoded bits, modulates the bits, and sends the bits to a receiving device through channel transmission. The receiving device may perform polar code decoding on received codewords.

Based on a separate source and channel coding (separate source and channel coding, SSCC) solution, an existing communication system using a cellular communication technology, a wireless communication technology (Wi-Fi), or the like first performs source coding or compression processing on to-be-sent source data, performs channel coding on compressed data, and adds redundancy, to improve reliability of information transmission. To make full use of source redundancy at a physical layer and improve transmission performance, joint source and channel coding (joint source and channel coding, JSCC) is a solution that can implement both source compression and channel protection. Compared with SSCC, JSCC has significant performance gains in short code scenarios.

However, polar codes used in an existing system are non-systematic codes, and cannot support coding and retransmission in JSCC.

### SUMMARY

This application provides a coding method and an apparatus, to effectively use a probability distribution feature of to-be-coded source bits, and improve transmission performance.

According to a first aspect, an encoding method is provided. The method may be performed by a sending device, or may be performed by a chip having a function similar to that of a sending device. It may be understood that the sending device may be a network device or a terminal device. In the method, the sending device may determine a mother code in a k^{th} transmission based on a length of to-be-transmitted bits in the k^{th} transmission, k is an integer greater than or equal to 2. The sending device may perform systematic polar encoding on to-be-coded bits in the k^{th} transmission based on the mother code, to obtain the to-be-transmitted bits. The sending device may send the to-be-transmitted bits. In a possible case, when the length of the to-be-transmitted bits in the k^{th} transmission is greater than a length of non-transmitted bits in a (k-1)^{th} transmission, a location index set that is of the to-be-transmitted bits and that is in the mother code in the k^{th} transmission is determined based on a location index set srcₖ that is of source bits in the k^{th} transmission and that is in the mother code in the k^{th} transmission, a location index set frz'ₖ₋₁ that is of frozen bits in the (k-1)^{th} transmission and that is in the mother code in the k^{th} transmission, and a location index set frzₖ that is of frozen bits in the k^{th} transmission and that is in the mother code in the k^{th} transmission. In another possible case, when the length of the to-be-transmitted bits in the k^{th} transmission is less than or equal to a length of non-transmitted bits in a (k-1)^{th} transmission, a location index set that is of the to-be-transmitted bits and that is in the mother code in the k^{th} transmission is determined based on a location index set R'ₖ₋₁ that is of the non-transmitted bits in the (k-1)^{th} transmission and that is in the mother code in the k^{th} transmission.

Based on the solution, bits in a retransmission phase are encoded through systematic polar encoding, so that a probability distribution feature of to-be-coded source bits is effectively used, and retransmission performance is improved.

In a possible implementation, when the length of the to-be-transmitted bits in the k^{th} transmission is less than or equal to the length of the non-transmitted bits in the (k-1)^{th} transmission, elements in the location index set that is of the to-be-transmitted bits and that is in the mother code in the k^{th} transmission include elements in R'ₖ₋₁.

Based on the solution, when the length of the to-be-transmitted bits in the k^{th} transmission is less than or equal to the length of the non-transmitted bits in the (k-1)^{th} transmission, it may be considered that a quantity of non-transmitted bits in the (k-1)^{th} transmission can meet a requirement of a quantity of to-be-retransmitted bits in the k^{th} transmission. Therefore, coding complexity can be reduced without changing a length of the mother code.

In a possible implementation, the sending device may determine a location index set that is of first bits in the (k-1)^{th} transmission and that is in the mother code in the k^{th} transmission. The first bits include source bits, cyclic redundancy check CRC bits, and frozen bits. The sending device performs rate matching on the mother code in the k^{th} transmission, to obtain a location index set Rₖ that is of non-transmitted bits in the k^{th} transmission and that is in the mother code in the k^{th} transmission. The sending device determines the location index set srcₖ that is of the source bits in the k^{th} transmission and that is in the mother code in the k^{th} transmission based on a location index set src'ₖ₋₁ that is of the source bits in the (k-1)^{th} transmission and that is in the mother code in the k^{th} transmission, R'ₖ₋₁, the mother code in the k^{th} transmission, a mother code in the (k-1)^{th} transmission, and Rₖ.

Based on the solution, the sending device can determine the location index set srcₖ that is of the source bits in the k^{th} transmission and that is in the mother code in the k^{th} transmission, so that the sending device can determine locations of the to-be-transmitted bits in the mother code in the k^{th} transmission.

In a possible implementation, elements included in the location index set that is of the first bits in the (k-1)^{th} transmission and that is in the mother code in the k^{th} transmission are a sum of location indexes that are of the first bits in the (k-1)^{th} transmission and that are in the mother code in the (k-1)^{th} transmission and a length of the mother code in the (k-1)^{th} transmission.

In an example, the location index set that is of the source bits in the (k-1)^{th} transmission and that is in the mother code in the k^{th} transmission is src'ₖ₋₁=srcₖ₋₁+N_{m,k-1}. A location index set that is of PC bits in the (k-1)^{th} transmission and that is in the mother code in the k^{th} transmission is pc'ₖ₋₁=pcₖ₋₁+N_{m,k-1}, a location index set that is of the frozen bits in the (k-1)^{th} transmission and that is in the mother code in the k^{th} transmission is frz'ₖ₋₁=frzₖ₋₁+N_{m,k-1}, the location index set that is of the non-transmitted bits in the (k-1)^{th} transmission and that is in the mother code in the k^{th} transmission is R'ₖ₋₁=Rₖ₋₁+N_{m,k-1}, and a location index set that is of the CRC bits in the (k-1)^{th} transmission and that is in the mother code in the k^{th} transmission is chk'ₖ₋₁=chkₖ₋₁+N_{m,k-1}.

In another example, src'ₖ₋₁ = srcₖ₋₁ + N_{m,k}/2. pc,ₖ₋₁ = pcₖ₋₁ + N_{m,k}/2, frz'ₖ₋₁=frzₖ₋₁+N_{m,k}/2, R'ₖ₋₁=Rₖ₋₁+N_{m,k}/2, and chk'ₖ₋₁=chkₖ₋₁+N_{m,k}/2.

Based on the solution, the sending device can update the location indexes that are of the first bits in the (k-1)^{th} transmission and that are in the mother code in the k^{th} transmission, so that the first bits in the (k-1)^{th} transmission occupy location indexes with higher bit reliability.

In a possible implementation, the sending device determines a first union set of a location index set in the mother code in the (k-1)^{th} transmission, src'ₖ₋₁, and the location index set R'ₖ₋₁ that is of the non-transmitted bits in the (k-1)^{th} transmission and that is in the mother code in the k^{th} transmission. The sending device determines a first difference set between the first union set and Rₖ. The sending device sorts location indexes in the first difference set in descending order of bit reliability. The sending device selects top-ranked Ns location indexes as srcₖ. Optionally, the sending device selects top-ranked location indexes that satisfy Gₖ(Δsrcₖ, frz'ₖ₋₁)=0 as srcₖ. Gₖ represents a polar matrix of a polar code whose length is N_{m,k}, and Δsrcₖ=srcₖ\src'ₖ₋₁.

Based on the solution, the sending device can select Ns most reliable location indexes as srcₖ.

In a possible implementation, the sending device uses a difference set between src'ₖ₋₁ and srcₖ as a location index set Δpcₖ of target parity check PC bits in the k^{th} transmission. The sending device uses a union set of a location index set pc'ₖ₋₁ that is of PC bits in a first transmission to the (k-1)^{th} transmission and that is in the mother code in the k^{th} transmission and Δpcₖ as a location index set pcₖ of PC bits in the first transmission to the k^{th} transmission. The sending device uses a difference set between a location index set in the mother code in the k^{th} transmission and pcₖ, srcₖ, Rₖ, and a location index set chkₖ of CRC bits in the k^{th} transmission as frzₖ. Location indexes of the to-be-transmitted bits include elements in Δpcₖ and in a difference set between frzₖ and frz'ₖ₋₁.

Based on the solution, the sending device can determine locations of the to-be-transmitted bits in the mother code in the k^{th} transmission, to send the to-be-transmitted bits.

In a possible implementation, the sending device determines a second union set of a location index set in the mother code in the (k-1)^{th} transmission and R'ₖ₋₁. The sending device determines a second difference set between the second union set and Rₖ. The sending device sorts location indexes in the second difference set in descending order of bit reliability. The sending device selects top-ranked N_{PC} location indexes as a location index set Δsrcₖ of target source bits in the k^{th} transmission. The sending device selects lower-ranked N_{PC} location indexes in src'ₖ₋₁ as a location index set Δpcₖ of target PC bits in the k^{th} transmission. The sending device determines a difference set between src'ₖ₋₁ and Δpcₖ. The sending device uses a union set of Δsrcₖ and the difference set between src'ₖ₋₁ and Δpcₖ as srcₖ. Optionally, the sending device may select top-ranked N_{PC} location indexes that satisfy Gₖ(Δsrcₖ, frz'ₖ₋₁)=0 as Δsrcₖ.

Based on the solution, the sending device can select N_{PC} most reliable bits as location indexes that are of source bits newly added in the k^{th} transmission and that are in the mother code.

In a possible implementation, the sending device uses a difference set between a location index set in the mother code in the k^{th} transmission and pcₖ, srcₖ, Rₖ, and a location index set chkₖ of CRC bits in the k^{th} transmission as frzₖ. Location indexes of the to-be-transmitted bits include elements in Δpcₖ and in a difference set between frzₖ and frz'ₖ₋₁.

Based on the solution, the sending device can determine locations of the to-be-transmitted bits in the mother code in the k^{th} transmission, to send the to-be-transmitted bits.

In a possible implementation, the rate matching includes shortening or puncturing.

Based on the solution, the sending device can determine the non-transmitted bits in a shortening or puncturing manner, and further determine the location index set that is of the non-transmitted bits and that is in the mother code in the k^{th} transmission.

In a possible implementation, a value of a bit corresponding to an element in Δsrcₖ is the same as a value of a bit corresponding to an element in Δpcₖ.

Based on the solution, the sending device can perform one-to-one check on bits corresponding to elements in Δsrcₖ and bits corresponding to elements in Δpcₖ.

According to a second aspect, an encoding method is provided. The method may be performed by a receiving device, or may be performed by a chip having a function similar to that of a receiving device. It may be understood that the receiving device may be a network device or a terminal device. In the method, the receiving device receives to-be-transmitted bits in a k^{th} transmission from a sending device. The receiving device may decode the to-be-transmitted bits. In a possible case, when a length of the to-be-transmitted bits in the k^{th} transmission is greater than a length of non-transmitted bits in a (k-1)^{th} transmission, a location index set that is of the to-be-transmitted bits and that is in a mother code in the k^{th} transmission is determined based on a location index set srcₖ that is of source bits in the k^{th} transmission and that is in the mother code in the k^{th} transmission, a location index set frz'ₖ₋₁ that is of frozen bits in the (k-1)^{th} transmission and that is in the mother code in the k^{th} transmission, and a location index set frzₖ that is of frozen bits in the k^{th} transmission and that is in the mother code in the k^{th} transmission. In another possible case, when a length of the to-be-transmitted bits in the k^{th} transmission is less than or equal to a length of non-transmitted bits in a (k-1)^{th} transmission, a location index set that is of the to-be-transmitted bits and that is in a mother code in the k^{th} transmission is determined based on a location index set R'ₖ₋₁ that is of the non-transmitted bits in the (k-1)^{th} transmission and that is in the mother code in the k^{th} transmission.

In a possible implementation, when the length of the to-be-transmitted bits in the k^{th} transmission is less than or equal to the length of the non-transmitted bits in the (k-1)^{th} transmission, elements in the location index set that is of the to-be-transmitted bits and that is in the mother code in the k^{th} transmission include elements in R'ₖ₋₁.

In a possible implementation, the location index set srcₖ that is of the source bits in the k^{th} transmission and that is in the mother code in the k^{th} transmission is determined based on a location index set src'ₖ₋₁ that is of the source bits in the (k-1)^{th} transmission and that is in the mother code in the k^{th} transmission, R'ₖ₋₁, the mother code in the k^{th} transmission, a mother code in the (k-1)^{th} transmission, and Rₖ.

In a possible implementation, elements included in a location index set that is of first bits in the (k-1)^{th} transmission and that is in the mother code in the k^{th} transmission are a sum of location indexes that are of the first bits in the (k-1)^{th} transmission and that are in the mother code in the (k-1)^{th} transmission and a length of the mother code in the (k-1)^{th} transmission. The first bits include source bits, cyclic redundancy check CRC bits, and frozen bits.

In a possible implementation, the location index set srcₖ that is of the source bits in the k^{th} transmission and that is in the mother code in the k^{th} transmission is top-ranked Ns location indexes in a first difference set. The first difference set is a difference set between a first union set and Rₖ, and the first union set is a union set of a location index set in the mother code in the (k-1)^{th} transmission, src'ₖ₋₁, and the location index set R'ₖ₋₁ that is of the non-transmitted bits in the (k-1)^{th} transmission and that is in the mother code in the k^{th} transmission.

In a possible implementation, location indexes of the to-be-transmitted bits include elements in Δpcₖ and in a difference set between frzₖ and frz'ₖ₋₁. frzₖ is determined based on a difference set between a location index set in the mother code in the k^{th} transmission and a location index set pcₖ of PC bits in a first transmission to the k^{th} transmission, srcₖ, Rₖ, and a location index set chkₖ of CRC bits in the k^{th} transmission, pcₖ is determined based on a difference set between src'ₖ₋₁ and srcₖ and a location index set pc'ₖ₋₁ that is of PC bits in the first transmission to the (k-1)^{th} transmission and that is in the mother code in the k^{th} transmission.

In a possible implementation, srcₖ is determined based on a union set of a difference set between src'ₖ₋₁ and a location index set Δpcₖ of target PC bits in the k^{th} transmission and a location index set Δsrcₖ of target source bits in the k^{th} transmission. Δpcₖ includes lower-ranked N_{PC} location indexes in src'ₖ₋₁. Δsrcₖ includes top-ranked N_{PC} location indexes in a second difference set. The second difference set is a difference set between a second union set and Rₖ. The second union set is a union set of the location index set in the mother code in the (k-1)^{th} transmission and R'ₖ₋₁.

In a possible implementation, location indexes of the to-be-transmitted bits include elements in Δpcₖ and in a difference set between frzₖ and frz'ₖ₋₁. frzₖ is determined based on a difference set between a location index set in the mother code in the k^{th} transmission and pcₖ, srcₖ, Rₖ, and a location index set chkₖ of CRC bits in the k^{th} transmission.

In a possible implementation, the rate matching includes shortening or puncturing.

In a possible implementation, a value of a bit corresponding to an element in Δsrcₖ is the same as a value of a bit corresponding to an element in Δpcₖ.

According to a third aspect, an embodiment of this application provides a communication apparatus. The apparatus may be a sending device, or may be a chip or a module used in a sending device. The apparatus has a function of implementing any implementation method of the first aspect. The function may be implemented by hardware, or may be implemented by hardware executing corresponding software. The hardware or the software includes one or more modules or units corresponding to the function.

According to a fourth aspect, an embodiment of this application provides a communication apparatus. The apparatus may be a receiving device, or may be a chip or a module used in a receiving device. The apparatus has a function of implementing any implementation method of the second aspect. The function may be implemented by hardware, or may be implemented by hardware executing corresponding software. The hardware or the software includes one or more modules or units corresponding to the function.

According to a fifth aspect, this application provides a communication apparatus, including a processor, where the processor is coupled to a memory, the memory is configured to store a computer program or instructions, and the processor is configured to execute the computer program or the instructions, to perform the implementation methods in the first aspect and the second aspect. The memory may be located inside or outside the apparatus. There is one or more processors.

According to a sixth aspect, this application provides a communication apparatus, including: a processor and an interface circuit, where the interface circuit is configured to communicate with another apparatus, and the processor is configured to perform the implementation methods in the first aspect and the second aspect.

According to a seventh aspect, a communication apparatus is provided. The apparatus includes a logic circuit and an input/output interface.

In a design, the logic circuit is configured to determine a mother code in a k^{th} transmission based on a length of to-be-transmitted bits in the k^{th} transmission, and perform systematic polar encoding on to-be-coded bits in the k^{th} transmission based on the mother code, to obtain the to-be-transmitted bits. The input/output interface is configured to output the to-be-transmitted bits.

In a design, the input/output interface is configured to input to-be-transmitted bits in a k^{th} transmission from a sending device. The logic circuit is configured to decode the to-be-transmitted bits.

According to an eighth aspect, this application provides a communication system, including: a communication apparatus configured to perform the implementation method in the first aspect, and a communication apparatus configured to perform the implementation method in the second aspect.

According to a ninth aspect, this application further provides a chip system, including: a processor, configured to implement the implementation methods in the first aspect and the second aspect.

According to a tenth aspect, this application further provides a computing program product, including computer-executable instructions. When the computer-executable instructions are run on a computer, the implementation methods in the first aspect and the second aspect are implemented.

According to an eleventh aspect, this application further provides a computer-readable storage medium. The computer-readable storage medium stores a computer program or instructions. When the computer program or the instructions are run on a computer, the implementation methods in the first aspect and the second aspect are implemented.

For technical effects that can be achieved in the second aspect to the eleventh aspect, refer to technical effects that can be achieved in each design in the first aspect. Details are not described herein again.

### BRIEF DESCRIPTION OF DRAWINGS

FIG. 1 is a diagram of a communication system according to an embodiment of this application;
FIG. 2A shows a polar-based JSCC solution according to an embodiment of this application;
FIG. 2B shows a polar-based retransmission solution according to an embodiment of this application;
FIG. 3 is a diagram of an architecture of an encoding method according to an embodiment of this application;
FIG. 4 is an example flowchart of an encoding method according to an embodiment of this application;
FIG. 5A is a diagram of location indexes of source bits and CRC bits according to an embodiment of this application;
FIG. 5B is a diagram of encoding in a retransmission phase according to an embodiment of this application;
FIG. 6 is a diagram of encoding in a retransmission phase according to an embodiment of this application;
FIG. 7 is a diagram of a decoding manner according to an embodiment of this application;
FIG. 8 is a diagram of a communication apparatus according to an embodiment of this application;
FIG. 9 is a diagram of a communication apparatus according to an embodiment of this application;
FIG. 10 is a diagram of a communication apparatus according to an embodiment of this application; and
FIG. 11 is a diagram of a communication apparatus according to an embodiment of this application.

### DESCRIPTION OF EMBODIMENTS

The technical solutions provided in embodiments of this application are explained and described below with reference to the accompanying drawings.

Embodiments of this application may be applied to a plurality of fields in which polar coding is used, for example, the data storage field, the optical network communication field, and the wireless communication field. The wireless communication field may include but is not limited to a 5G communication system, a future communication system (for example, a 6G communication system), a satellite communication system, a narrowband-internet of things (narrowband internet of things, NB-IoT) system, a global system for mobile communications (global system for mobile communications, GSM), an enhanced data rates for GSM evolution (enhanced data rates for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronous code division multiple access, TD-SCDMA) system, a long term evolution (long term evolution, LTE) system, and three major application scenarios of a 5G mobile communication system: eMBB, ultra-reliable low-latency communication (ultra-reliable low-latency communication, URLLC), and massive machine-type communications (massive machine-type communications, mMTC).

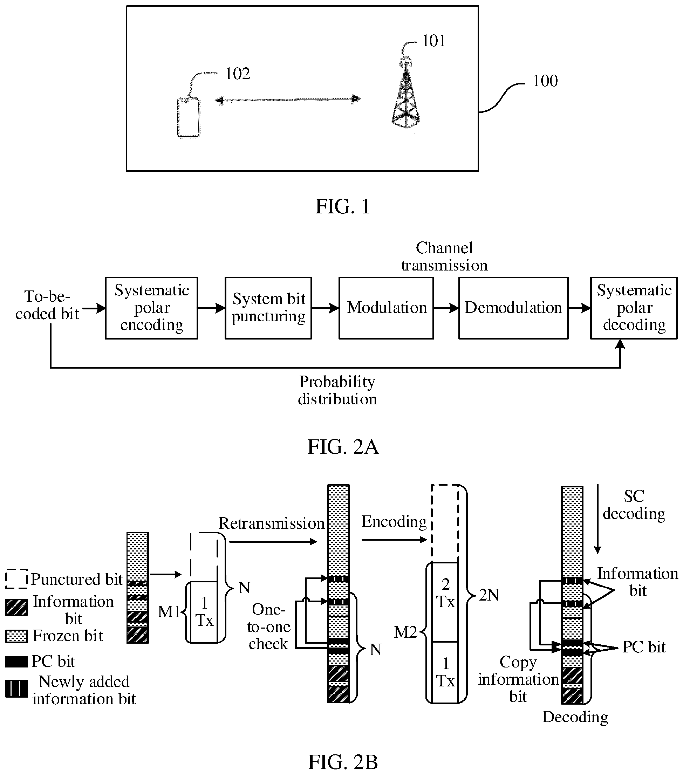

With reference to FIG. 1, the following describes a communication system to which an encoding method and a decoding method provided in embodiments of this application are applicable. Refer to FIG. 1. The communication system 100 includes a sending device 101 and a receiving device 102. The sending device 101 may be a network device or a terminal device, and the receiving device 102 may be a network device or a terminal device. Optionally, when the sending device 101 is a network device, the receiving device 102 may be a terminal device. When the receiving device 102 is a network device, the sending device 101 may be a terminal device.

The sending device 101 may include an encoder. The sending device 101 may perform systematic polar encoding on source bits via the encoder, and output an encoded codeword. The encoded codeword may be transmitted on a channel to the receiving device 102 after being rate matched, interleaved, and modulated. The receiving device 102 may include a decoder. The receiving device 102 may receive and demodulate a signal from the sending device 101. The receiving device 102 may decode the received signal via the decoder.

The terminal device in this application includes a device that provides a voice and/or data connectivity for a user. Specifically, the terminal device includes a device that provides a voice for the user, includes a device that provides data connectivity for the user, or includes a device that provides a voice and data connectivity for the user. For example, the terminal device may include a handheld device having a wireless connection function or a processing device connected to a wireless modem. The terminal device may include user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine-type communications (machine-to-machine/machine-type communications, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal device (remote terminal), an access terminal device (access terminal), a user terminal device (user terminal), a user agent (user agent), a user device (user device), a satellite, an unmanned aerial vehicle, a balloon, an aircraft, or the like. For example, the terminal device may include a mobile phone (or referred to as a "cellular" phone), a computer having a mobile terminal device, or a portable, pocket-sized, hand-held, or a computer-embedded mobile apparatus. For example, it may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with relatively low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner. By way of example, and not limitation, in embodiments of this application, the terminal device may alternatively be a wearable device. The wearable device may also be referred to as a wearable intelligent device, an intelligent wearable device, or the like, and is a general term for wearable devices developed by intelligently designing everyday wearing by applying a wearable technology. If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board unit, OBU).

The network device in this application includes, for example, an access network (access network, AN) device, such as a base station (for example, an access point), and may be a device that is in an access network and that communicates with a wireless terminal device over an air interface through one or more cells. Alternatively, the network device is, for example, a road side unit (road side unit, RSU) in a vehicle-to-everything (vehicle-to-everything, V2X) technology. The network device may include an evolved NodeB (NodeB or eNB or e-NodeB, evolved NodeB) in a long term evolution (long term evolution, LTE) or long term evolution-advanced (long term evolution-advanced, LTE-A) system, or may include a next generation NodeB (next generation NodeB, gNB) in an evolved packet core (evolved packet core, EPC), a 5th generation mobile communication technology (5th generation, 5G), a new radio (new radio, NR) system (also referred to as an NR system for short), or may include a central unit (central unit, CU) and a distributed unit (distributed unit, DU) in a cloud access network (cloud radio access network, Cloud RAN) system, a satellite, an unmanned aerial vehicle, a balloon, an aircraft, or the like. This is not limited in embodiments of this application.

Based on a separate source and channel coding (separate source and channel coding, SSCC) solution, an existing communication system using a cellular communication technology, a wireless communication technology (Wi-Fi), or the like first performs source coding or compression processing on to-be-sent source data, performs channel coding on compressed data, and adds redundancy, to improve reliability of information transmission. The source coding is usually completed at an application layer, and the channel coding is usually completed at a physical layer. Traditional source coding, such as source coding for pictures, videos, voices, and texts, is not error-resistant. Therefore, channel coding needs to be performed at the physical layer in combination with a mechanism such as retransmission, so that a receiving end completes error-free recovery of bits transmitted at the physical layer. For the physical layer, channel coding and transmission are mainly performed on bit streams obtained through conventional source coding. It is assumed that ideal source coding has been completed at an upper layer, and an approximately equal sequence is obtained. Generally, only a lossless transmission mode is supported. However, in actual application, some data that is not fully compressed, for example, control information from a link layer or the physical layer, to-be-fed-back channel state information, and some upper-layer application data, may be processed at the physical layer.

To make full use of source redundancy at the physical layer and improve transmission performance, joint source and channel coding (joint source and channel coding, JSCC) is a solution that can implement both source compression and channel protection. Compared with SSCC, JSCC has significant performance gains in short code scenarios. Moreover, JSCC can support more possible transmission modes, such as lossy transmission. In addition, JSCC can flexibly control distortion of reconstructed data at the receiving end, and can adapt to different application requirements.

FIG. 2A describes a systematic polar (polar) code-based JSCC solution. In this procedure, a transmitting end may perform systematic polar encoding on to-be-coded bits. To implement a specific compression function, the transmitting end performs a puncturing operation on system bits in encoded bits. In other words, the transmitting end may send only check bits. The transmitting end modulates punctured bits, and sends the punctured bits to a receiving end through a channel. The receiving end may obtain the check bits through demodulation. The receiving end may perform systematic polar decoding based on the check bits and probability distribution information of the to-be-coded bits. The probability distribution information of the to-be-coded bits may be determined by the receiving end in a preset manner. A manner in which the receiving end obtains the probability distribution information of the to-be-coded bits is not specifically limited in this application.

It can be seen from FIG. 2A that, in the systematic polar-based JSCC solution, only a transmission mode during initial transmission is provided, and there is no corresponding retransmission design. To switch between a lossy transmission mode and a lossless transmission mode more effectively, retransmission is also an important scenario for JSCC.

FIG. 2B describes a polar code-based retransmission solution. It can be seen from FIG. 2B that, in an initial transmission phase, a transmitting end may perform polar code encoding on information bits and frozen bits. The transmitting end punctures and modulates encoded bits, and sends the bits to a receiving end through a channel. In a retransmission phase, the transmitting end may sort bit reliability based on an extended mother code. In the extended mother code, there are non-transmitted bits in the initial transmission phase. Bits whose bit reliability ranks top in the bits may be used to transmit information bits with lower bit reliability in the initial transmission phase. The information bits with lower bit reliability may be used as PC bits for one-to-one check. It can be seen from FIG. 2B that, the one-to-one check may be understood as that the PC bits are compared with corresponding information bits with lower bit reliability in the initial transmission phase, so that values of the PC bits and values of the corresponding information bits are the same. The transmitting end may perform polar code encoding on the one-to-one checked bits. The transmitting end may puncture and modulate the bits on which the polar code encoding is performed, and sends the bits to the receiving end through the channel. The receiving end may perform joint decoding based on the one-to-one checked PC bits and the bits received in the initial transmission phase.

In the procedure shown in FIG. 2B, the polar code-based retransmission solution is described. However, polar codes are non-systematic codes, and cannot support coding and retransmission in JSCC.

In view of this, an embodiment of this application provides an encoding method. In the method, bits in a retransmission phase are encoded through systematic polar encoding, so that a probability distribution feature of to-be-coded source bits is effectively used, and retransmission performance is improved.

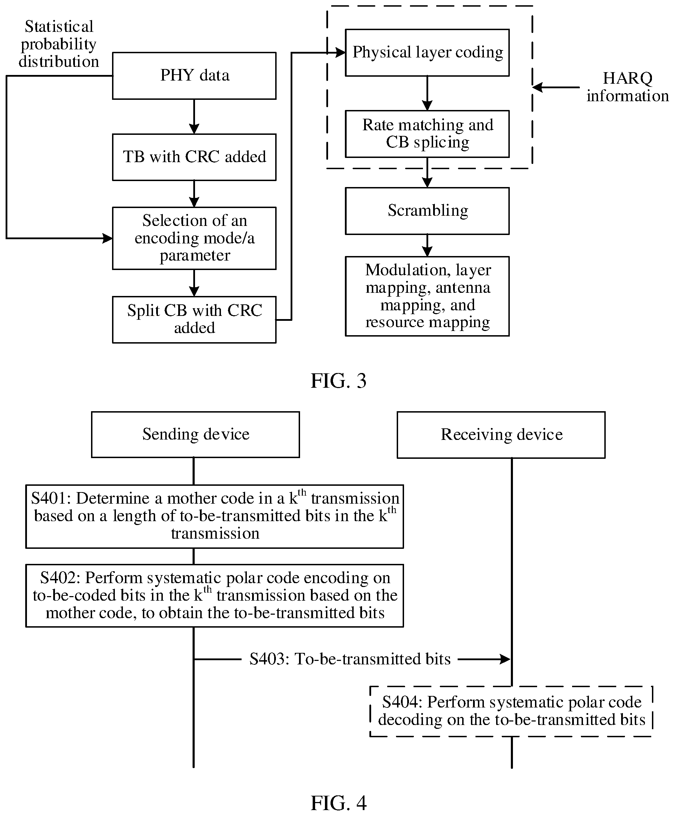

FIG. 3 is a diagram of an architecture of an encoding method according to an embodiment of this application. A system architecture to which the encoding method provided in this embodiment of this application is applied is shown in FIG. 3. A sending device may select an encoding mode and a parameter based on sparseness of physical layer (physical layer, PHY) data. When determining that the to-be-transmitted PHY data is sparse, the sending device may select a JSCC mode for encoding, to effectively use redundant information in the PHY data and improve overall transmission performance. The PHY data being sparse may be considered as that a probability distribution p0 of 0 or a probability distribution p1 of 1 is far away from 0.5, for example, less than 0.3 or greater than 0.7. The sending device may add CRC to a transport block (transport block, TB) of the PHY data, split, in the selected JSCC mode, the TB with the CRC added into code blocks (code blocks, CBs), and add CRC to the split CBs. The sending device may perform physical layer coding and rate matching on the CBs with the CRC added. The sending device may perform the physical layer coding in the JSCC mode. The sending device may splice the CBs obtained through the rate matching, scramble the spliced CBs, perform modulation, layer mapping, antenna mapping, and resource mapping on the scrambled CBs, and send the CBs to a receiving device. Optionally, the sending device may add hybrid automatic repeat request (hybrid automatic repeat request, HARQ) information to the CBs with the CRC added, and perform the physical layer coding and the rate matching based on the information.

FIG. 4 is an example flowchart of an encoding method according to an embodiment of this application. The method may include the following operations.

S401: A sending device determines a mother code in a k^{th} transmission based on a length of to-be-transmitted bits in the k^{th} transmission.

k may be an integer greater than or equal to 1. For example, k may be equal to 1, 2, or 3. Optionally, k may be an integer greater than or equal to 2. It may be understood that k needs to be less than a predefined or preset maximum quantity of transmissions.

In an example, it may be considered that k being 1 indicates an initial transmission phase. In the initial transmission phase, the sending device may set the length N_{c} of the to-be-transmitted bits and a length Nₛ of source bits. In this case, the sending device may determine that a length of bits obtained through rate matching is Nₖ=Nₛ+N_{c}. The sending device may obtain a length ${N}_{m , k} = {2}^{\left⌈{log}_{2}\left({N}_{k}\right)\right⌉}$ of a mother code M₁ in the initial transmission phase based on Nₖ, where $\left⌈⋅\right⌉$ represents a rounding up operation. In the formula, the subscript k is equal to 1.

In another example, it may be considered that k being an integer greater than or equal to 2 indicates a retransmission phase. In the retransmission phase, the sending device may set the length N_{RT,k} of the to-be-transmitted bits. In the retransmission phase, the to-be-transmitted bits may also be referred to as to-be-retransmitted bits. To distinguish between an initial transmission phase and the retransmission phase, the to-be-transmitted bits are referred to as to-be-retransmitted bits below. A length of bits in the k^{th} transmission before the rate matching is ${\sum }_{i = 2}^{k} {N}_{RT , k} + {N}_{c}$. It may be understood that in different retransmission phases, N_{RT,k} may be the same or may be different. Whether N_{RT,k} is the same may be negotiated by the sending device and the receiving device, or may be predefined in a protocol, or may be indicated by the sending device to the receiving device. The sending device may determine that a length of bits obtained through rate matching is ${N}_{k} = {N}_{s} + {N}_{c} + {\sum }_{i = 2}^{k} {N}_{RT , k}$. For example, when k=2, the length of the bits obtained through the rate matching is Nₖ=Nₛ+N_{c}+N_{RT,2}. The sending device may obtain a length N_{m,k} = ${2}^{\left⌈{log}_{2}\left({N}_{k}\right)\right⌉}$ of a mother code Mₖ in the k^{th} transmission based on Nₖ.

S402: The sending device performs systematic polar encoding on to-be-coded bits in the k^{th} transmission based on the mother code, to obtain the to-be-transmitted bits.

It should be noted that, in the initial transmission phase and the retransmission phase, processes in which the sending device performs systematic polar encoding on the to-be-coded bits in the k^{th} transmission are different. The following separately describes Case 1 and Case 2.

### Case 1: Initial transmission phase.

In a possible implementation, the sending device may determine locations that are of the to-be-coded bits in the k^{th} transmission and that are in the mother code M₁ in the first transmission. The to-be-coded bits in the k^{th} transmission may include non-transmitted bits, source bits, CRC bits, and frozen bits.

In an example, the sending device performs rate matching on the mother code M₁, to determine a location index set R₁ that is of non-transmitted bits in the first transmission and that is in the mother code M₁ in the first transmission. For example, the sending device may puncture or shorten the mother code M₁. It may be understood that a rate matching manner of the sending device is not specifically limited in this embodiment of this application. For example, the sending device may puncture the mother code M₁ in a sequential puncturing manner or a bit-reversal puncturing manner. For another example, the sending device may shorten the mother code M₁ in a sequential shortening manner or a bit-reversal shortening manner.

The non-transmitted bits may be understood as bits that are punctured or shortened after the sending device performs the rate matching on the mother code M₁. For example, the non-transmitted bits may include punctured bits shown in FIG. 2B. The sending device may determine, through the rate matching, the location index set R₁ that is of the non-transmitted bits and that is in the mother code M₁ in the first transmission. For example, it can be seen from FIG. 2B that the location index set R₁ that is of the non-transmitted bits and that is in the mother code M₁ in the first transmission may include a location index set of the punctured bits.

Optionally, the sending device may set elements in the location index set R₁ that is of the non-transmitted bits and that is in the mother code M₁ in the first transmission as frozen bits. Such frozen bits are non-sent frozen bits. In other words, the sending device may set bit values of bits corresponding to the elements in R₁ to 0.

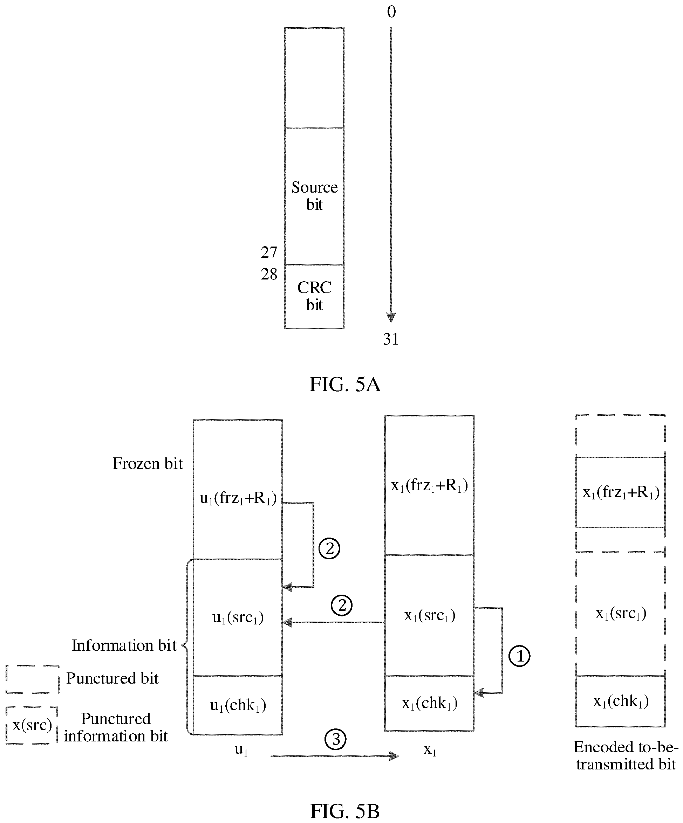

In another example, refer to FIG. 5A. In the initial transmission phase, the sending device may determine, from the mother code M₁ in the first transmission, a location index set src₁ of source bits and a location index set chk₁ of CRC bits. The location index set src₁ of the source bits precedes the location index set chk₁ of the CRC bits. FIG. 5A is used as an example. Elements in the location index set chk₁ of the CRC bits occupy rear location indexes in the mother code M₁. For example, a start location index of the bits in the mother code M₁ is 0, a quantity of CRC bits is 4, and the length of the to-be-coded bits is 32. It may be considered that the elements in the location index set chk₁ of the CRC bits include a location index 31, a location index 30, a location index 29, and a location index 28. However, location indexes included in elements in the location index set src₁ of the source bits start from a location index 27, and a quantity of elements included in the location index set src₁ of the source bits is the same as a quantity of source bits.

An example in which a start index of the location indexes in FIG. 5A is 0 is used as an example. It may be understood that the start index of the location indexes may alternatively be 1. This is not specifically limited in this application.

In still another example, the sending device may determine, from the mother code M₁, a location index set frz₁ of frozen bits. It should be noted that such frozen bits are to-be-sent frozen bits that do not include the foregoing non-transmitted bits that are set to the frozen bits "0". It can be seen from FIG. 5A that elements in the location index set frz₁ of the to-be-sent frozen bits include location indexes of bits other than the elements included in a location index set R₁ of the non-transmitted bits, a location index set chk₁ of the CRC bits, and a location index set src₁ of the source bits.

In another possible implementation, the sending device may encode the to-be-coded bits based on the foregoing determined location index set. The sending device may assign the to-be-coded bits to corresponding location indexes one by one based on location indexes that are of the to-be-coded bits and that are in the mother code M₁. For example, the sending device may assign the source bits to bits corresponding to elements included in src₁. Refer to FIG. 5B. In an encoding process, the sending device may convert the to-be-transmitted bits into a to-be-sent N_{m,1}-dimensional row vector. As shown in FIG. 5B, x₁ is the to-be-sent N_{m,1}-dimensional row vector, and x₁(a) represents bits corresponding to a set a in the vector x₁. For example, x₁(src₁) represents source bits in the vector x₁. u₁ shown in FIG. 5B is a N_{m,1}-dimensional row vector, and is an intermediate quantity in a systematic polar encoding process. u₁(a) represents bits corresponding to a set a in the vector u₁. For example, u₁(src₁) represents an intermediate quantity corresponding to locations of source bits in the vector u₁, and element locations in the vector x₁(src₁) are in one-to-one correspondence with element locations in the vector u₁(src₁).

It should be noted that the sending device may perform CRC check. x₁(chk₁)=check(x₁(src₁)) (corresponding to ① in FIG. 5B). It can be seen from FIG. 5B that the CRC check may be performed on x₁(chk₁) by using elements in x₁(src₁), and check represents a check function. It should be noted that a CRC check manner is not specifically limited in this embodiment of this application.

After the CRC check, the sending device may perform preprocessing transformation on the vector x₁ to obtain u₁. During the preprocessing transformation, u₁(info₁)=[x₁(info₁)-u₁(frz₁+R₁)*G₁(frz₁+R₁, info₁)]*G₁(info₁)⁻¹ (corresponding to ② in FIG. 5B).

u₁(frz₁+R₁) indicates preset values of frozen bits, for example, all the values are 0. info₁=src₁ + chk₁, indicating an information bit set, and corresponding to a system bit of a systematic polar code. The set operation "+" indicates calculating a union set. G₁ represents a polar matrix of a polar code whose length is N_{m,1}, G₁(a, b) represents a row of a set a corresponding to the polar matrix G₁ and a column of a set b corresponding to the polar matrix G₁, and G₁(a) represents the row and a column of the set a corresponding to the polar matrix G₁.

After the preprocessing transformation, the sending device may perform polarization transformation (corresponding to ③ in FIG. 5B) on the vector u₁, to obtain encoded frozen bits. During the polarization transformation, x₁( frz₁ + R₁ )=u₁(info₁)*G₁(infoₖ, frz₁+R₁)+u₁(frz₁+R₁)*G₁(frz₁+R₁).

After ① to ③, the sending device completes encoding of the to-be-coded bits. The sending device may send the encoded bits to the receiving device based on a rate matching result. The sending device punctures the source bits based on a compression configuration.

### Case 2: Retransmission phase.

In a possible implementation, in the retransmission phase, the length N_{m,k} of the mother code Mₖ in the k^{th} transmission may be the same as or different from a length N_{m,k-1} of a mother code Mₖ₋₁ in a (k-1)^{th} transmission.

In a possible implementation, when the length N_{RT,k} of the to-be-retransmitted bits in the k^{th} transmission is greater than a length of non-transmitted bits in the (k-1)^{th} transmission, the length N_{m,k} of the mother code Mₖ in the k^{th} transmission is different from the length N_{m,k-1} of the mother code Mₖ₋₁ in the (k-1)^{th} transmission. The sending device may determine locations that are of the to-be-coded bits and that are in the mother code Mₖ in the k^{th} transmission. The to-be-coded bits may include non-transmitted bits, source bits, CRC bits, and frozen bits. Optionally, the to-be-coded bits in the retransmission phase may further include PC bits.

Based on the solution, when the length of the to-be-retransmitted bits N_{RT,k} in the k^{th} transmission is greater than the length of the non-transmitted bits in the (k-1)^{th} transmission, it may be considered that a quantity of non-transmitted bits in the (k-1)^{th} transmission does not meet a requirement of a quantity of to-be-retransmitted bits in the k^{th} transmission. Therefore, the length of the mother code is changed, so that the sending device performs an encoding operation.

In an example, the sending device may determine a location index set that is of first bits in the (k-1)^{th} transmission and that is in the mother code Mₖ in the k^{th} transmission. The first bits include non-transmitted bits, source bits, CRC bits, and frozen bits. In a possible case, elements included in the location index set that is of the first bits in the (k-1)^{th} transmission and that is in the mother code Mₖ in the k^{th} transmission are a sum of location indexes that are of the first bits in the (k-1)^{th} transmission and that are in the mother code Mₖ₋₁ in the (k-1)^{th} transmission and a length N_{m,k-1} of the mother code Mₖ in the (k-1)^{th} transmission. For example, a location index set that is of source bits in the (k-1)^{th} transmission and that is in the mother code Mₖ in the k^{th} transmission is src'ₖ₋₁=srcₖ₋₁+N_{m,k-1}. A location index set that is of PC bits in the (k-1)^{th} transmission and that is in the mother code Mₖ in the k^{th} transmission is pc'ₖ₋₁=pcₖ₋₁+N_{m,k-1}, a location index set that is of frozen bits in the (k-1)^{th} transmission and that is in the mother code Mₖ in the k^{th} transmission is frz'ₖ₋₁=frzₖ₋₁+N_{m,k-1}, a location index set that is of the non-transmitted bits in the (k-1)^{th} transmission and that is in the mother code Mₖ in the k^{th} transmission is R'ₖ₋₁=Rₖ₋₁+N_{m,k-1}, and a location index set that is of CRC bits in the (k-1)^{th} transmission and that is in the mother code Mₖ in the k^{th} transmission is chk'ₖ₋₁=chkₖ₋₁+N_{m,k-1}.

In another possible case, because the length N_{m,k} of the mother code Mₖ in the k^{th} transmission is twice the length N_{m,k-1} of the mother code Mₖ₋₁ in the (k-1)^{th} transmission, it may be considered that a half of the length N_{m,k} of the mother code Mₖ in the k^{th} transmission is the length N_{m,k-1} of the mother code Mₖ₋₁ in the (k-1)^{th} transmission. Therefore, elements included in the location index set that is of the first bits in the (k-1)^{th} transmission and that is in the mother code Mₖ in the k^{th} transmission are a sum of location indexes that are of the first bits in the (k-1)^{th} transmission and that are in the mother code Mₖ₋₁ in the (k-1)^{th} transmission and the half of the length N_{m,k} of the mother code Mₖ in the k^{th} transmission. For example, src'ₖ₋₁=srcₖ₋₁+N_{m,k}/2. pc_{'k-1} =pcₖ₋₁+N_{m,k}/2, frz'ₖ₋₁=frzₖ₋₁+N_{m,k}/2, R'ₖ₋₁=Rₖ₋₁+N_{m,k}/ 2, and chk'ₖ₋₁=chkₖ₋₁+N_{m,k}/2.

It may be understood that, in the formula, aₖ₋₁ may be considered as a location index set that is of the set a and that is in the mother code Mₖ₋₁ in the (k-1)^{th} transmission. For example, Rₖ₋₁ is a location index set that is of the non-transmitted bits and that is in the mother code Mₖ₋₁ in the (k-1)^{th} transmission.

It should be noted that when k=2, pcₖ₋₁ and pc'ₖ₋₁ are empty sets.

In another example, the sending device may perform rate matching on the mother code Mₖ in the k^{th} transmission, to obtain a location index set Rₖ that is of non-transmitted bits in the k^{th} transmission and that is in the mother code Mₖ in the k^{th} transmission. For example, the sending device may puncture or shorten the mother code Mₖ. Puncturing is used as an example. The sending device calculates, based on N_{m,k} and Nₖ, a length N_{m,k}-Nₖ of bits that currently need to be punctured. In this case, the sending device may obtain, based on a currently selected puncturing scheme and txₖ₋₁ = src'ₖ₋₁ + pc'ₖ₋₁ + frz'ₖ₋₁ + chk'ₖ₋₁, the location index set Rₖ=f_{punc}(N_{m,k}-Nₖ+n)\txₖ₋₁ of the non-transmitted bits in the k^{th} transmission, where n is a non-negative integer satisfying |Rₖ|=N_{m,k}-Nₖ, f_{punc}(m) represents a function for obtaining m puncturing location sets, and |·| represents an operation for calculating a quantity of elements in the set.

Shortening is used as an example. Rₖ=fₛₕₒᵣₜ(N_{m,k}-Nₖ+n)\txₖ₋₁, and fₛₕₒᵣₜ(m) represents a function for obtaining m shortening location sets.

In still another example, the sending device may determine srcₖ based on src'ₖ₋₁, R'ₖ₋₁, N_{m,k}, and Rₖ. It may be understood that manners of determining srcₖ by the sending device include Manner 1 and Manner 2, which are separately described below.

Manner 1: The sending device may select Ns most reliable location indexes from a set [(Δ+src'ₖ₋₁+R'ₖ₁)\Rₖ] as srcₖ. Δ={ 1, 2, ..., N_{m,k}/2} is a location index set newly added to the mother code in the k^{th} transmission. It may be understood that Δ is determined based on a location index set that is of the mother code in the (k-1)^{th} transmission and that is in the mother code in the k^{th} transmission.

The sending device may determine srcₖ in the set [(Δ+src'ₖ₋₁+R'ₖ₋₁)\Rₖ]. "\" may represent a difference set operation of the set. For example, the sending device may sort location indexes included in the set [(Δ+src'ₖ₋₁+R'ₖ₋₁)\Rₖ] in descending order of bit reliability. The sending device may select top-ranked Ns location indexes that satisfy Gₖ(Δsrcₖ, frz'ₖ₋₁)=0 as srcₖ. Gₖ represents a polar matrix of a polar code whose length is N_{m,k}, and Δsrcₖ=srcₖ\ src'ₖ₋₁.

It should be noted that the sorting in descending order of bit reliability in Manner 1 is merely an example. The sending device may alternatively sort the location indexes included in the set [(Δ+src'ₖ₋₁+R'ₖ₋₁)\Rₖ] in ascending order of bit reliability. This is not specifically limited in this application. When the sending device sorts the location indexes included in the set [(Δ+src'ₖ₋₁+R'ₖ₋₁)\Rₖ] in ascending order of bit reliability, the sending device may select lower-ranked Ns location indexes that satisfy Gₖ(Δsrcₖ, frz'ₖ₋₁)=0 as srcₖ, where Δsrcₖ=srcₖ\ src'ₖ₋₁.

Based on the solution, the sending device can select Ns most reliable location indexes from the set [(Δ+src'ₖ₋₁+R'ₖ₋₁)\Rₖ] as srcₖ, so that performance of the k^{th} transmission can be improved, and a decoding success rate can be improved.

Optionally, the sending device may determine pcₖ based on srcₖ. For example, the sending device may obtain target PC bits, referred to as Δpcₖ, where Δpcₖ=src'ₖ₋₁\srcₖ. The sending device may combine a location index set pc'ₖ₋₁ that is of PC bits in the first transmission to the (k-1)^{th} transmission and that is in the mother code Mₖ in the k^{th} transmission with the location index set Δpcₖ of the target PC bits in the k^{th} transmission, to obtain the location index set pcₖ that is of the PC bits and that is in the mother code Mₖ. In other words, pcₖ = pc'ₖ₋₁+Δpcₖ. Optionally, bits corresponding to elements included in Δpcₖ are used for one-to-one check with bits corresponding to elements included in Δsrcₖ.

It may be understood that the location index set of the PC bits in the first transmission is an empty set. pc'ₖ₋₁ may be considered as the location index set that is of the PC bits in the (k-1)^{th} transmission and that is in the mother code Mₖ. Because the PC bits in the (k-1)^{th} transmission also include PC bits in the first transmission to a (k-2)^{th} transmission, pc'ₖ₋₁ may also be considered as the location index set that is of the PC bits in the first transmission to the (k-1)^{th} transmission and that is in the mother code Mₖ in the k^{th} transmission.

Based on the solution, the sending device can determine pcₖ based on srcₖ, so that the sending device can perform PC check on newly added source bits based on the PC bits.

Manner 2: The sending device may determine srcₖ in a set [(Δ+R'ₖ₋₁)\Rₖ].

The sending device may determine a preset quantity N_{PC} of PC bits. The sending device may select, from the set [(Δ+R'ₖ₋₁)\Rₖ], N_{PC} most reliable location indexes satisfying Gₖ(Δsrcₖ, frz'ₖ₋₁)=0 as location indexes Δsrcₖ of newly added source bits in the k^{th} transmission. For example, the sending device may sort elements in the set [(Δ+R'ₖ₋₁)\Rₖ] in descending order of bit reliability. The sending device may select N_{PC} location indexes that rank higher and that satisfy Gₖ(Δsrcₖ, frz'ₖ₋₁)=0 as Δsrcₖ.

It should be noted that the sending device sorts elements in the set [(Δ+R'ₖ₋₁)\Rₖ] in descending order of bit reliability is merely shown as an example. Alternatively, the sending device may sort the elements in the set [(Δ+R'ₖ₋₁)\Rₖ] in ascending order of bit reliability. Details are not described herein again.

The sending device may select N_{PC} most unreliable location indexes from src'ₖ₋₁ as a location index set Δpcₖ of target PC bits. In this case, srcₖ = src'ₖ₋₁\Δpcₖ + Δsrcₖ, where pcₖ = Δpcₖ + pc'ₖ₋₁. It may be understood that bits corresponding to elements included in Δpcₖ are used for one-to-one check with bits corresponding to elements included in Δsrcₖ.

Based on Manner 2, the sending device can determine the location indexes of the source bits and the PC bits in the k^{th} transmission.

In a possible case, the sending device may determine a location index set frzₖ that is of the frozen bits and that is in the mother code Mₖ in the k^{th} transmission. frzₖ={1, 2, ..., N_{m,k}}\(srcₖ+pcₖ+Rₖ+chkₖ).

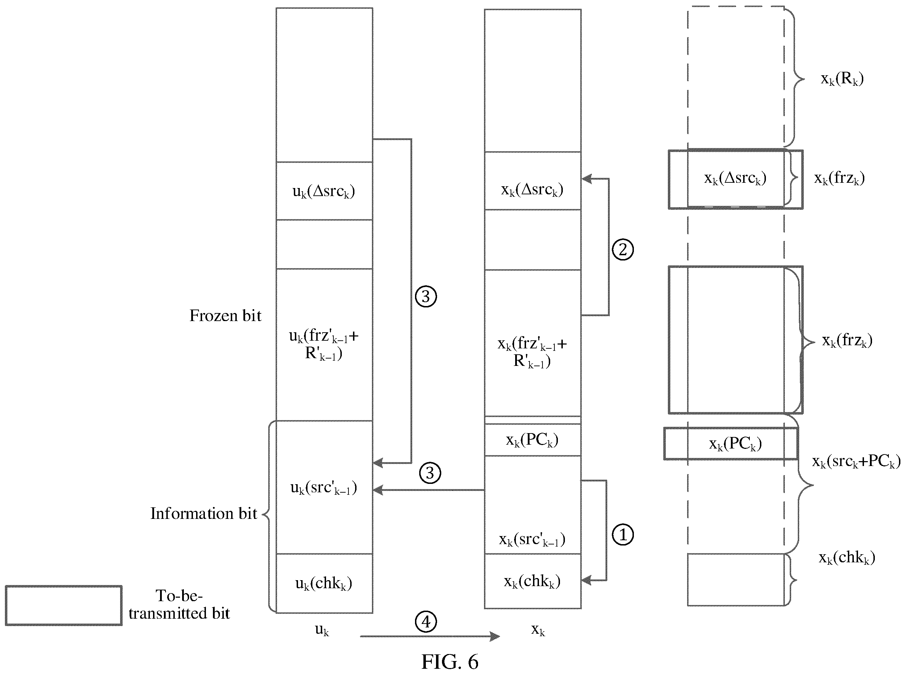

In a possible implementation, the sending device may encode the to-be-coded bits based on the foregoing determined location index set. The sending device may assign the to-be-coded bits to the corresponding location indexes. Refer to FIG. 6. In an encoding process, the sending device may convert the to-be-transmitted bits into a to-be-sent N_{m,k}-dimensional row vector. As shown in FIG. 6, xₖ is the to-be-sent N_{m,k}-dimensional row vector, and xₖ(a) represents bits corresponding to a set a in the vector xₖ. uₖ shown in FIG. 6 is a N_{m,k}-dimensional row vector, and is an intermediate quantity in a systematic polar encoding process. uₖ(a) represents bits corresponding to a corresponding set a in the vector uₖ.

It should be noted that the sending device may perform CRC check. xₖ( chkₖ )=check(xₖ( srcₖ )) (corresponding to ① in FIG. 6). A CRC check manner is not specifically limited in this embodiment of this application.

After the CRC check, the sending device may perform one-to-one check, in other words, one-to-one PC check xₖ(Δpcₖ)=xₖ(Δsrcₖ) (corresponding to ② in FIG. 6), on PC bits and source bits in the vector xₖ. The formula may be understood as: comparing, in a one-to-one manner based on the determined location index set Δpcₖ of the target PC bits and the location index set Δsrcₖ of the newly added source bits and in a sequence of elements in Δpcₖ and Δsrcₖ, bit values corresponding to the elements included in Δpcₖ with bit values corresponding to the elements included in Δsrcₖ, so that values of the checked bits are the same in a one-to-one manner.

After the one-to-one check, the sending device may perform preprocessing transformation on the vector xₖ to obtain uₖ. During the preprocessing transformation, uₖ(infoₖ)=[xₖ(infoₖ)-uₖ(frzₖ+Rₖ)*Gₖ(frzₖ+Rₖ, infoₖ)]*Gₖ(infoₖ)⁻¹ (corresponding to ③ in FIG. 6). uₖ( frzₖ + Rₖ ) indicates preset values of frozen bits, for example, all the values are 0. infoₖ=srcₖ+chkₖ, indicating an information bit set, and corresponding to a system bit of a systematic polar code.

After the preprocessing transformation, the sending device may perform polarization transformation (corresponding to ④ in FIG. 6) on the vector uₖ. During the polarization transformation, xₖ(frzₖ+Rₖ)=uₖ(infoₖ)*Gₖ(infoₖ, frzₖ+Rₖ)+uₖ(frzₖ+Rₖ)*Gₖ(frzₖ+Rₖ).

It should be noted that, due to a property of a systematic code, it can be ensured that neither the source bits nor the CRC bits that have been sent in the initial transmission phase and that are in the vector xₖ change. In other words, xₖ(src_{1,k})=x₁(src₁) and xₖ(chk_{1,k})=x₁(chk₁). src_{1,k} and chk_{1,k} respectively represent location index sets that are of the source bits and the CRC bits in the initial transmission phase and that are in the k^{th} transmission.

In addition, the part of frozen bits that have been sent in the initial transmission phase in the vector xₖ does not change, that is, the vector xₖ(frz_{1,k})=x₁(frz₁). frz_{1,k} represents a location index set of the frozen bits that have been sent in the initial transmission phase and that is in the k^{th} transmission.

After ① to ④, the sending device can complete encoding of the to-be-coded bits in the retransmission phase, and the sending device may send the encoded to-be-transmitted bits to the receiving device based on a rate matching result. The sending device punctures the source bits based on a compression configuration.

In another possible implementation, when the length N_{RT,k} of the to-be-retransmitted bits in the k^{th} transmission is less than or equal to a length of non-transmitted bits in the (k-1)^{th} transmission, the length N_{m,k} of the mother code Mₖ in the k^{th} transmission is the same as the length N_{m,k-1} of the mother code Mₖ₋₁ in the (k-1)^{th} transmission. Locations of to-be-transmitted bits in the mother code Mₖ in the k^{th} transmission are the same as locations of to-be-transmitted bits in the mother code Mₖ₋₁ in the (k-1)^{th} transmission. The sending device may encode the to-be-coded bits in the manner shown in FIG. 5B. Details are not described herein again.

Optionally, when the length N_{RT,k} of the to-be-retransmitted bits in the k^{th} transmission is less than or equal to the length of the non-transmitted bits in the (k-1)^{th} transmission, the sending device may alternatively determine the locations of the to-be-transmitted bits in the k^{th} transmission in the manner of determining the locations of the to-be-transmitted bits in the mother code Mₖ when the length N_{RT,k} of the to-be-retransmitted bits in the k^{th} transmission is greater than the length of the non-transmitted bits in the (k-1)^{th} transmission. Details are not described herein again.

Based on the solution, when the length of the to-be-retransmitted bits N_{RT,k} in the k^{th} transmission is less than or equal to the length of the non-transmitted bits in the (k-1)^{th} transmission, it may be considered that a quantity of non-transmitted bits in the (k-1)^{th} transmission can meet a requirement of a quantity of to-be-retransmitted bits in the k^{th} transmission. Therefore, coding complexity can be reduced without changing the length of the mother code.

S403: The sending device sends the to-be-transmitted bits.

Correspondingly, the receiving device receives the to-be-transmitted bits.

In a possible case, the to-be-transmitted bits in the initial transmission phase may include other bits than the non-transmitted bits and the punctured source bits. It can be seen from FIG. 5B that the to-be-transmitted bits in the initial transmission phase may include the frozen bits and the CRC bits. In other words, the sending device may send the encoded frozen bits and the encoded CRC bits to the receiving device.

In another possible case, the to-be-transmitted bits in the retransmission phase vary with the length of the mother code. In an example, the to-be-transmitted bits may be bits with highest reliability in the non-transmitted bits in the (k-1)^{th} transmission. For example, the non-transmitted bits in the (k-1)^{th} transmission may be punctured bits or shortened bits. The sending device may sort the non-transmitted bits in descending order of bit reliability, and select N_{RT,k} bits whose reliability ranks higher as the to-be-transmitted bits. It may be understood that the sending device may sort the non-transmitted bits in ascending order of bit reliability. Details are not described herein again.

In another example, location indexes of the to-be-transmitted bits may be determined based on Δpcₖ, frzₖ, and frz'ₖ₋₁. For example, a location index set of the to-be-transmitted bits includes elements in Δpcₖ and frzₖ\frz'ₖ₋₁. In other words, the to-be-transmitted bits include bits corresponding to the elements in Δpcₖ and frzₖ\frz'ₖ₋₁.

The following separately describes a puncturing-based systematic polar encoding method and a shortening-based systematic polar encoding method by using Example 1 and Example 2.

### Example 1: Puncturing-based systematic polar encoding method.

The following uses an example in which initial transmission is performed by using a code (14, 10). A code length is 14, 10 information bits include eight source bits and two CRC bits, and a length of frozen bits is 4. All the eight source bits are punctured, and six bits are actually sent, including two CRC bits and four frozen bits. A length of a mother code corresponding to the code is 16, and a length for puncturing is 2. Assuming that the sending device performs bit-reversal puncturing, R₁={1, 9}. It is assumed that a bit reliability order of location indexes that are of the remaining bits and that are in the mother code in the initial transmission phase in ascending order is 2, 3, 5, 4, 6, 7, 10, 11, 13, 8, 12, 14, 15, and 16. The sending device obtains that src₁={6, 7, 8, 10, 11, 12, 13, 4}, chk₁={15, 16}, and frz₁={2, 3, 4, 5} based on the bit reliability order.

In a first retransmission, that is, k=2, it is assumed that a quantity of retransmitted bits is N_{RT,2}=8. In this case, in the first retransmission, the length N_{m,2} of the mother code is 32. The length for puncturing is 10. The sending device determines location index sets that are of source bits, non-transmitted bits, CRC bits, and frozen bits in the initial transmission phase and that are in the mother code in the first retransmission. R'₁ = {17, 25}, where src'₁={22, 23, 24, 26, 27, 28, 29, 30}, chk'₁={31, 32}, frz'₁={18, 19, 20, 21}, and pc'₁={ }. The sending device may determine a newly added location index set Δ={1, 2, ..., 16} of the mother code. In this way, the sending device may determine a location index set tx₁={18, 19, ..., 24, 26, 27, ..., 32} that is of bits sent in the initial transmission phase and that is in the mother code in the first retransmission.

The sending device performs bit-reversal puncturing, to obtain a puncturing location index set {1, 3, 5, 9, 13, 17, 19, 21, 25, 29}. 19, 21, and 29 have been present in tx₁. The sending device may determine that R2=f_{punc}(10+5)\tx₁={1, 3, 5, 7, 9, 11, 13, 15, 17, 25}.

The sending device may determine a set [(Δ+src'₁+R'₁)\R₂]={2, 4, 6, 8, 10, 12, 14, 16, 22, 23, 24, 26, 27, 28, 29, 30}. The sending device sorts the elements in the set [(Δ+src'₁+R'₁)\R₂] in ascending order of bit reliability, and a sorting result is 2, 4, 6, 10, 8, 12, 14, 22, 23, 26, 27, 29, 16, 24, 28, 30. The sending device selects eight most reliable elements from the result as a location index set src₂={16, 23, 24, 26, 27, 28, 29, 30} of the source bits. The sending device may determine that pc₂=src'₁\src₂={22}, and Δsrc₂=src₂\src'₁={16}.

The sending device may determine that frz₂={1, 2, ..., 32}\(src₂+pc₂+R₂+chk₂)={2, 4, 6, 8, 10, 12, 14, 18, 19, 20, 21}. The sending device encodes to-be-coded bits, and sends the to-be-transmitted bits. Location indexes of the to-be-transmitted bits include pc₂={22} and frz₂\frz'₁={2, 4, 6, 8, 10, 12, 14}.

### Example 2: Shortening-based systematic polar encoding method.

The following uses an example in which initial transmission is performed by using a code (14, 10). A code length is 14, 10 information bits include eight source bits and two CRC bits, and a length of frozen bits is 4. It is assumed that all the eight source bits are punctured, and six bits are actually sent, including two CRC bits and four frozen bits. A length of a mother code corresponding to the code is 16, and a length for shortening is 2. If the sending device performs bit-reversal shortening, R₁={8, 16}. It is assumed that a bit reliability order of location indexes that are of the remaining bits and that are in the mother code in the initial transmission phase in ascending order is 1, 2, 3, 5, 9, 4, 6, 7, 10, 11, 13, 12, 14, 15. The sending device obtains that src₁={4, 6, 7, 9, 10, 11, 12, 13}, chk₁={14, 15}, and frz₁={1, 2, 3, 5} based on the bit reliability order.

In a first retransmission, that is, k=2, it is assumed that a quantity of retransmitted bits is N_{RT,2}=8. In this case, in the first retransmission, the length N_{m,2} of the mother code is 32. The length for puncturing is 10. The sending device determines location index sets that are of source bits, non-transmitted bits, CRC bits, and frozen bits in the initial transmission phase and that are in the mother code in the first retransmission. src'₁={20, 22, 23, 25, 26, 27, 28, 29}, frz'₁={17, 18, 19,21}, R'₁={24, 32}, chk'₁={30, 31}, and pc'₁={ }. The sending device may determine a newly added location index set Δ={1, 2, ..., 16} of the mother code. In this way, the sending device may determine a location index set tx₁={17, 18, ..., 23, 25, 26, ..., 31} that is of bits sent in the initial transmission phase and that is in the mother code in the first retransmission.

The sending device performs bit-reversal shortening, to obtain a shortening set { 14, 30, 4, 20, 12, 28, 8, 24, 16, 32}. 20, 28, and 30 have been present in tx₁. The sending device may determine that R₂=fₛₕₒᵣₜ(10+5)\tx₁={2, 4, 6, 8, 10, 12, 14, 16, 24, 32}.

The sending device may determine a set [(Δ+src'₁+R'₁)\R₂]={1, 3, 5, 7, 9, 11, 13, 15, 20, 22, 23, 25, 26, 27, 28, 29}. The sending device sorts the elements in the set [(Δ+src'₁+R'₁)\R₂] in ascending order of bit reliability, and a sorting result is 1, 3, 5, 9, 7, 11, 13, 25, 20, 15, 22, 23, 26, 27, 29, 28. The sending device selects eight most reliable elements from the result as a location index set src₂={15, 20, 22, 23, 26, 27, 28, 29} of the source bits. The sending device may determine that pc₂=src'₁\src₂={25}, and Δsrc₂=src₂\src'₁={15}.

The sending device may determine that frz₂={1, 2, ..., 32}\(src₂+pc₂+R₂+chk₂)={1, 3, 5, 7, 9, 11, 13, 17, 18, 19, 21}. The sending device encodes to-be-coded bits, and sends the to-be-transmitted bits. Location indexes of the to-be-transmitted bits include pc₂={25} and frz₂\frz'₁={1, 3, 5, 7, 9, 11, 13}.

Optionally, the embodiment shown in FIG. 4 may further include the following S404.

S404: The receiving device performs systematic polar decoding on the to-be-transmitted bits in the k^{th} transmission.

In a possible implementation, the receiving device may decode the received to-be-transmitted bits. In a possible case, in the initial transmission phase, all the source bits are punctured, and soft information (log likelihood ratio, LLR)=log(p₀/p₁) of the source bits is obtained. log(p₀/p₁) is prior information of a probability distribution. LLRs of the frozen bits and the CRC bits are obtained through demodulation. For other punctured bits than the source bits, LLR=0, and for shortened bits, LLR=oo. The sending device may input corresponding LLRs in the to-be-transmitted bits to a decoder, to decode the to-be-transmitted bits. In another possible case, in the retransmission phase, for the source bits, LLR=log(p₀/p₁). For the PC bits LLR=LLR_{ch}+log(p₀/p₁). LLR_{ch} is soft information obtained through demodulation, and log(p₀/p₁) is prior information of a probability distribution. LLRs of the frozen bits and the CRC bits are obtained through demodulation. For other punctured bits than the source bits, LLR=0, and for shortened bits, LLR= 0 or ∞. It should be noted that a value of the LLR of the shortened bits is determined based on a polarization relationship. The sending device may input corresponding LLRs in the to-be-transmitted bits to a decoder, to decode the to-be-transmitted bits.

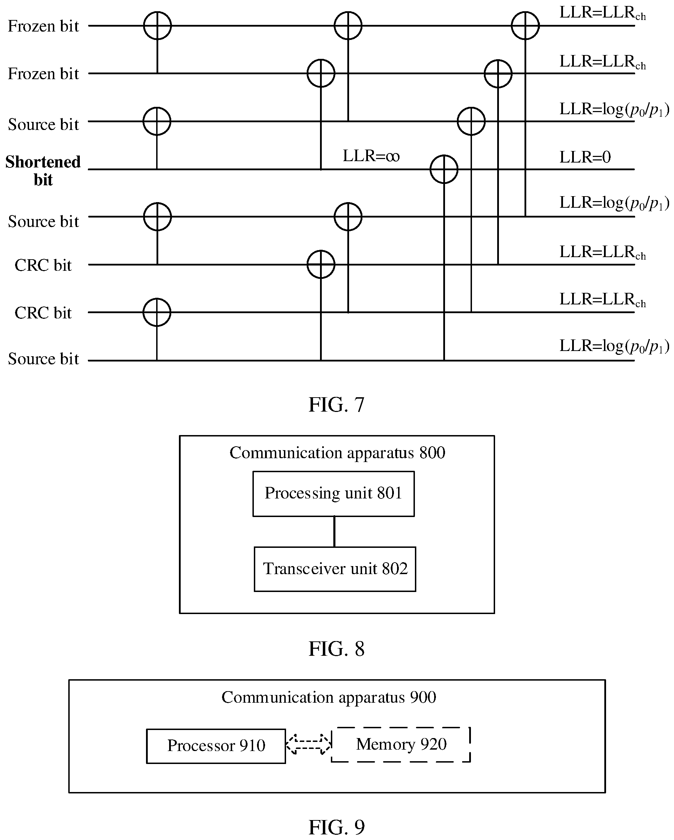

In another possible implementation, in a shortening mode, locations of the shortened bits after retransmission may not be regular enough. As a result, LLRs corresponding to locations of some shortened bits cannot be determined in the initialization phase, and can be reset to ∞ only after decoding is performed at specific locations. It is assumed that a code (7, 5) is obtained after the initial transmission and the first retransmission, and a length of a mother code corresponding to the code is 8, including three source bits, two CRC bits, two sent frozen bits, and one shortened frozen bit. Refer to FIG. 7. The sending device may initialize LLRs of the bits before decoding. The source bits are initialized by using probability distribution information, and both the CRC bits and the sent frozen bits are initialized by using LLR_{ch} obtained through demodulation. Because a polarized shortened bit is obtained by performing an exclusive OR operation on the shortened bit and a source bit at a location 8, a value of the shortened bit is uncertain. Therefore, the LLR of the shortened bit is initialized to 0. As the decoding is performed, when the decoding is performed on a bit at a location directly connected to the shortened bit, that is, the source bit at the location 8, the LLR of the shortened bit may be uniquely determined by a preset value of the shortened bit. It is assumed that the value of the shortened bit is 0. Therefore, the shortening bit may be directly set to ∞ or a large value.

It should be noted that, a main difference between a source-aware CC mode and the JSCC mode is that the source bits are not compressed during encoding, and only partial probability distribution information is used during decoding, improving decoding performance. In other words, initialization of the LLR of the source bits during decoding includes two parts: demodulation information during reception and the probability distribution information. For the source bits, LLR=LLR_{ch}+log(p₀/p₁). When p₁=p₀=0.5 or the receiving device does not send the probability distribution information of the data, the source-aware CC mode may directly fall back to channel coding with systematic polar codes used. When the to-be-transmitted bits sent in the k^{th} retransmission phase are selected, newly added source bits whose reliability ranks higher are directly sent, and source bits with low bit reliability that are sent in the (k-1)^{th} transmission phase are directly used as newly added PC bits.

The following uses an example in which initial transmission is performed by using a code (14, 10). A code length is 14, 10 information bits include eight source bits and two CRC bits, a length of frozen bits is 4, and 14 bits are actually sent. A length of a mother code corresponding to the code is 16, and a length for puncturing is 2. Assuming that the sending device performs bit-reversal puncturing, R₁={1, 9}. It is assumed that a bit reliability order of location indexes that are of the remaining bits and that are in the mother code in the initial transmission phase in ascending order is 2, 3, 5, 4, 6, 7, 10, 11, 13, 8, 12, 14, 15, 16. The sending device obtains that src₁={6, 7, 8, 10, 11, 12, 13, 14}, chk₁={15, 16}, and frz₁={2, 3, 4, 5} based on the bit reliability order.

In a first retransmission, that is, k=2, it is assumed that a quantity of retransmitted bits is N_{RT,2}=8. In this case, in the first retransmission, the length of the mother code is 32. The length for puncturing is 10. The sending device determines location index sets that are of source bits, non-transmitted bits, CRC bits, and frozen bits in the initial transmission phase and that are in the mother code in the first retransmission. src'₁={22, 23, 24, 26, 27, 28, 29, 30}, frz'₁={18, 19, 20, 21}, R'₁={17, 25}, chk'₁={31, 32}, and pc'₁={ }. The sending device may determine a newly added location index set Δ={1, 2, ..., 16} of the mother code. In this way, the sending device may determine a location index set tx₁={18, 19, ..., 24, 26, 27, ..., 32} that is of bits sent in the initial transmission phase and that is in the mother code in the first retransmission.

The sending device performs bit-reversal puncturing, to obtain a puncturing location index set {1, 3, 5, 9, 13, 17, 19, 21, 25, 29}. 19, 21, and 29 have been present in tx₁. The sending device may determine that R₂=f_{punc}(10+5)\tx₁={1, 3, 5, 7, 9, 11, 13, 15, 17, 25}.

The sending device may determine a set [(Δ+src'₁+R'₁)\R₂]={2, 4, 6, 8, 10, 12, 14, 16, 22, 23, 24, 26, 27, 28, 29, 30}. The sending device sorts the elements in the set [(Δ+src'₁+R'₁)\R₂] in ascending order of bit reliability, and a sorting result is 2, 4, 6, 10, 8, 12, 14, 22, 23, 26, 27, 29, 16, 24, 28, 30. The sending device selects eight most reliable elements from the result as a location index set src₂={16, 23, 24, 26, 27, 28, 29, 30} of the source bits. The sending device may determine that pc₂=src'₁\src₂={22}, and Δsrc₂=src₂\src'₁={16}.

The sending device may determine that frz₂={1, 2, ..., 32}\(src₂+pc₂+R₂+chk₂)={2, 4, 6, 8, 10, 12, 14, 18, 19, 20, 21}. The sending device encodes to-be-coded bits, and sends the to-be-transmitted bits. Location indexes of the to-be-transmitted bits include Δsrc₂={16} and frz₂\frz'₁={2, 4, 6, 8, 10, 12, 14}.

Based on the concept of the foregoing embodiments, refer to FIG. 8. An embodiment of this application provides a communication apparatus 800. The apparatus 800 includes a processing unit 801 and a transceiver unit 802. The apparatus 800 may be a sending device, a device used in a sending device, or an apparatus that can support a sending device in performing an encoding method. Alternatively, the apparatus 800 may be a receiving device, a device used in a receiving device, or an apparatus that can support a receiving device in performing an encoding method.

The transceiver unit may also be referred to as a transceiver module, a transceiver, a transceiver machine, a transceiver apparatus, or the like. The processing unit may also be referred to as a processor, a processing board, a processing unit, a processing apparatus, or the like. Optionally, a component that is in the transceiver unit and that is configured to implement a receiving function may be considered as a receiving unit. It should be understood that the transceiver unit is configured to perform a sending operation and a receiving operation on a sending device side or a receiving device side in the foregoing method embodiments, and a component that is in the transceiver unit and that is configured to implement a sending function is considered as a sending unit. In other words, the transceiver unit includes a receiving unit and a sending unit. When the apparatus 800 is used in a sending device, the sending unit included in the transceiver unit 802 of the apparatus 800 is configured to perform a sending operation on the sending device side, for example, send to-be-transmitted bits. Specifically, the sending unit may send the to-be-transmitted bits to a receiving device. When the apparatus 800 is used in a receiving device, the receiving unit included in the transceiver unit 802 of the apparatus 800 is configured to perform a receiving operation on the receiving device side, for example, receive to-be-transmitted bits. Specifically, the receiving unit may receive the to-be-transmitted bits from a sending device.

In addition, it should be noted that, if the apparatus is implemented by using a chip/chip circuit, the transceiver unit may be an input/output circuit and/or a communication interface, and perform an input operation (corresponding to the foregoing receiving operation) and an output operation (corresponding to the foregoing sending operation); and the processing unit is an integrated processor, a microprocessor, or an integrated circuit.

The following describes in detail an implementation in which the apparatus 800 is used in a sending device or a receiving device.

For example, operations performed by the units of the apparatus 800 when the apparatus 800 is used in the sending device are described in detail.

The processing unit 801 is configured to determine a mother code in a k^{th} transmission based on a length of to-be-transmitted bits in the k^{th} transmission, k is an integer greater than or equal to 2. The processing unit 801 is further configured to perform systematic polar encoding on to-be-transmitted bits to obtain the to-be-transmitted bits. The transceiver unit 802 is configured to send the to-be-transmitted bits. When the length of the to-be-transmitted bits in the k^{th} transmission is greater than a length of non-transmitted bits in a (k-1)^{th} transmission, a location index set that is of the to-be-transmitted bits and that is in the mother code in the k^{th} transmission is determined based on a location index set srcₖ that is of source bits in the k^{th} transmission and that is in the mother code in the k^{th} transmission, a location index set frz'ₖ₋₁ that is of frozen bits in the (k-1)^{th} transmission and that is in the mother code in the k^{th} transmission, and a location index set frzₖ that is of frozen bits in the k^{th} transmission and that is in the mother code in the k^{th} transmission. When the length of the to-be-transmitted bits in the k^{th} transmission is less than or equal to a length of non-transmitted bits in a (k-1)^{th} transmission, a location index set that is of the to-be-transmitted bits and that is in the mother code in the k^{th} transmission is determined based on a location index set R'ₖ₋₁ that is of the non-transmitted bits in the (k-1)^{th} transmission and that is in the mother code in the k^{th} transmission.

In a design, when the length of the to-be-transmitted bits in the k^{th} transmission is less than or equal to the length of the non-transmitted bits in the (k-1)^{th} transmission, elements in the location index set that is of the to-be-transmitted bits and that is in the mother code in the k^{th} transmission include elements in R'ₖ₋₁.

In a design, the processing unit 801 is further configured to: determine a location index set that is of first bits in the (k-1)^{th} transmission and that is in the mother code in the k^{th} transmission, where the first bits include source bits, cyclic redundancy check CRC bits, and frozen bits; perform rate matching on the mother code in the k^{th} transmission, to obtain a location index set Rₖ that is of non-transmitted bits in the k^{th} transmission and that is in the mother code in the k^{th} transmission; and determine the location index set srcₖ that is of the source bits in the k^{th} transmission and that is in the mother code in the k^{th} transmission based on a location index set src'ₖ₋₁ that is of the source bits in the (k-1)^{th} transmission and that is in the mother code in the k^{th} transmission, R'ₖ₋₁, the mother code in the k^{th} transmission, a mother code in the (k-1)^{th} transmission, and Rₖ.

In a design, elements included in the location index set that is of the first bits in the (k-1)^{th} transmission and that is in the mother code in the k^{th} transmission are a sum of location indexes that are of the first bits in the (k-1)^{th} transmission and that are in the mother code in the (k-1)^{th} transmission and a length of the mother code in the (k-1)^{th} transmission.

In a design, when determining srcₖ based on src'ₖ₋₁, R'ₖ₋₁, the mother code in the k^{th} transmission, the mother code in the (k-1)^{th} transmission, and Rₖ, the processing unit 801 is specifically configured to: determine a first union set of a location index set in the mother code in the (k-1)^{th} transmission, src'ₖ₋₁, and the location index set R'ₖ₋₁ that is of the non-transmitted bits in the (k-1)^{th} transmission and that is in the mother code in the k^{th} transmission; determine a first difference set between the first union set and Rₖ; sort location indexes in the first difference set in descending order of bit reliability; and select top-ranked Ns location indexes as srcₖ.

In a design, the processing unit 801 is further configured to: use a difference set between src'ₖ₋₁ and srcₖ as a location index set Δpcₖ of target parity check PC bits in the k^{th} transmission; use a union set of a location index set pc'ₖ₋₁ that is of PC bits in a first transmission to the (k-1)^{th} transmission and that is in the mother code in the k^{th} transmission and Δpcₖ as a location index set pcₖ of PC bits in the first transmission to the k^{th} transmission; and use a difference set between a location index set in the mother code in the k^{th} transmission and pcₖ, srcₖ, Rₖ, and a location index set chkₖ of CRC bits in the k^{th} transmission as frzₖ, where location indexes of the to-be-transmitted bits include elements in Δpcₖ and in a difference set between frzₖ and frz'ₖ₋1.

In a design, when determining srcₖ based on src'ₖ₋₁, R'ₖ₋₁, the mother code in the k^{th} transmission, the mother code in the (k-1)^{th} transmission, and Rₖ, the processing unit 801 is specifically configured to: determine a second union set of a location index set in the mother code in the (k-1)^{th} transmission and R'ₖ₋₁; determine a second difference set between the second union set and Rₖ; sort location indexes in the second difference set in descending order of bit reliability; select top-ranked N_{PC} location indexes as a location index set Δsrcₖ of target source bits in the k^{th} transmission; select lower-ranked N_{PC} location indexes in src'ₖ₋₁ as a location index set Δpcₖ of target PC bits in the k^{th} transmission; determine a difference set between src'ₖ₋₁ and Δpcₖ; and use a union set of Δsrcₖ and the difference set between src'ₖ₋₁ and Δpcₖ as srcₖ.

In a design, the processing unit 801 is further configured to: use a union set of a location index set pc'ₖ₋₁ that is of PC bits in a first transmission to the (k-1)^{th} transmission and that is in the mother code in the k^{th} transmission and Δpcₖ as a location index set pcₖ of PC bits in the first transmission to the k^{th} transmission; and use a difference set between a location index set in the mother code in the k^{th} transmission and pcₖ, srcₖ, Rₖ, and a location index set chkₖ of CRC bits in the k^{th} transmission as frzₖ, where location indexes of the to-be-transmitted bits include elements in Δpcₖ and in a difference set between frzₖ and frz'ₖ₋₁.

In a design, the rate matching includes shortening or puncturing.

In a design, a value of a bit corresponding to an element in Δsrcₖ is the same as a value of a bit corresponding to an element in Δpcₖ.

For example, operations performed by the units of the apparatus 800 when the apparatus 800 is used in the receiving device are described in detail.

The transceiver unit 802 is configured to receive to-be-transmitted bits in a k^{th} transmission from the sending device. The processing unit 801 is configured to decode to-be-transmitted bits. In a possible case, when a length of the to-be-transmitted bits in the k^{th} transmission is greater than a length of non-transmitted bits in a (k-1)^{th} transmission, a location index set that is of the to-be-transmitted bits and that is in a mother code in the k^{th} transmission is determined based on a location index set srcₖ that is of source bits in the k^{th} transmission and that is in the mother code in the k^{th} transmission, a location index set frz'ₖ₋₁ that is of frozen bits in the (k-1)^{th} transmission and that is in the mother code in the k^{th} transmission, and a location index set frzₖ that is of frozen bits in the k^{th} transmission and that is in the mother code in the k^{th} transmission. In another possible case, when a length of the to-be-transmitted bits in the k^{th} transmission is less than or equal to a length of non-transmitted bits in a (k-1)^{th} transmission, a location index set that is of the to-be-transmitted bits and that is in a mother code in the k^{th} transmission is determined based on a location index set R'ₖ₋₁ that is of the non-transmitted bits in the (k-1)^{th} transmission and that is in the mother code in the k^{th} transmission.

In a possible implementation, when the length of the to-be-transmitted bits in the k^{th} transmission is less than or equal to the length of the non-transmitted bits in the (k-1)^{th} transmission, elements in the location index set that is of the to-be-transmitted bits and that is in the mother code in the k^{th} transmission include elements in R'ₖ₋₁.

In a possible implementation, the location index set srcₖ that is of the source bits in the k^{th} transmission and that is in the mother code in the k^{th} transmission is determined based on a location index set src'ₖ₋₁ that is of the source bits in the (k-1)^{th} transmission and that is in the mother code in the k^{th} transmission, R'ₖ₋₁, the mother code in the k^{th} transmission, a mother code in the (k-1)^{th} transmission, and Rₖ.

In a possible implementation, elements included in a location index set that is of first bits in the (k-1)^{th} transmission and that is in the mother code in the k^{th} transmission are a sum of location indexes that are of the first bits in the (k-1)^{th} transmission and that are in the mother code in the (k-1)^{th} transmission and a length of the mother code in the (k-1)^{th} transmission. The first bits include source bits, cyclic redundancy check CRC bits, and frozen bits.

In a possible implementation, the location index set srcₖ that is of the source bits in the k^{th} transmission and that is in the mother code in the k^{th} transmission is top-ranked Ns location indexes in a first difference set. The first difference set is a difference set between a first union set and Rₖ, and the first union set is a union set of a location index set in the mother code in the (k-1)^{th} transmission, src'ₖ₋₁, and the location index set R'ₖ₋₁ that is of the non-transmitted bits in the (k-1)^{th} transmission and that is in the mother code in the k^{th} transmission.

In a possible implementation, location indexes of the to-be-transmitted bits include elements in Δpcₖ and in a difference set between frzₖ and frz'ₖ₋₁. frzₖ is determined based on a difference set between a location index set in the mother code in the k^{th} transmission and a location index set pcₖ of PC bits in a first transmission to the k^{th} transmission, srcₖ, Rₖ, and a location index set chkₖ of CRC bits in the k^{th} transmission, pcₖ is determined based on a difference set between src'ₖ₋₁ and srcₖ and a location index set pc'ₖ₋₁ that is of PC bits in the first transmission to the (k-1)^{th} transmission and that is in the mother code in the k^{th} transmission.

In a possible implementation, srcₖ is determined based on a union set of a difference set between src'ₖ₋₁ and a location index set Δpcₖ of target PC bits in the k^{th} transmission and a location index set Δsrcₖ of target source bits in the k^{th} transmission. Δpcₖ includes lower-ranked N_{PC} location indexes in src'ₖ₋₁. Δsrcₖ includes top-ranked N_{PC} location indexes in a second difference set. The second difference set is a difference set between a second union set and Rₖ. The second union set is a union set of the location index set in the mother code in the (k-1)^{th} transmission and R'ₖ₋₁.

In a possible implementation, location indexes of the to-be-transmitted bits include elements in Δpcₖ and in a difference set between frzₖ and frz'ₖ₋₁. frzₖ is determined based on a difference set between a location index set in the mother code in the k^{th} transmission and pcₖ, srcₖ, Rₖ, and a location index set chkₖ of CRC bits in the k^{th} transmission.

In a possible implementation, the rate matching includes shortening or puncturing.

In a possible implementation, a value of a bit corresponding to an element in Δsrcₖ is the same as a value of a bit corresponding to an element in Δpcₖ.

Based on the concept of the foregoing embodiments, as shown in FIG. 9, an embodiment of this application provides a communication apparatus 900. The communication apparatus 900 includes a processor 910. Optionally, the communication apparatus 900 may further include a memory 920, configured to store instructions executed by the processor 910, or store input data required by the processor 910 to run the instructions, or store data generated after the processor 910 runs the instructions. The processor 910 can implement, by using the instructions stored in the memory 920, the method shown in the foregoing method embodiments.

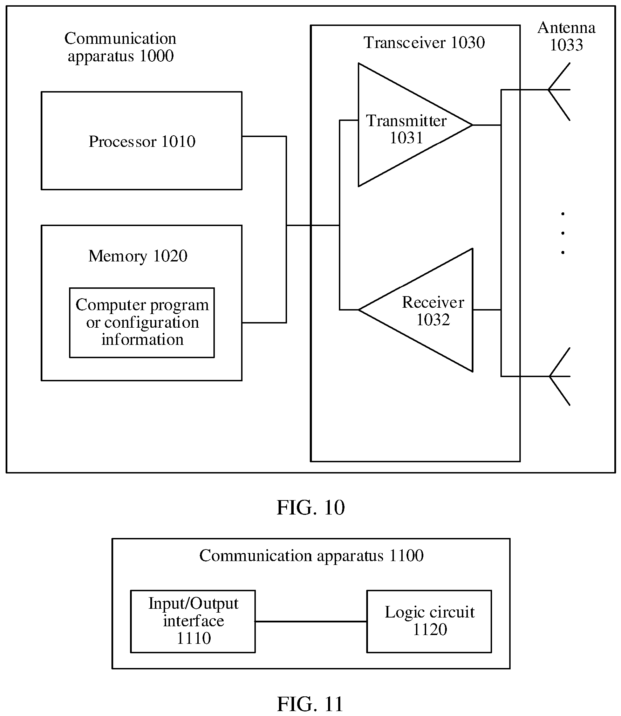

Based on the concept of the foregoing embodiments, as shown in FIG. 10, an embodiment of this application provides a communication apparatus 1000. The communication apparatus 1000 may be a chip or a chip system. Optionally, in this embodiment of this application, the chip system may include a chip, or may include a chip and another discrete component.

The communication apparatus 1000 may include at least one processor 1010. The processor 1010 is coupled to a memory. Optionally, the memory may be located inside or outside the apparatus. For example, the communication apparatus 1000 may further include at least one memory 1020. The memory 1020 stores a necessary computer program, configuration information, a computer program or instructions, and/or data for implementing any one of the foregoing embodiments. The processor 1010 may execute the computer program stored in the memory 1020, to complete the method in any one of the foregoing embodiments.

The coupling in this embodiment of this application may be an indirect coupling or a communication connection between apparatuses, units, or modules in an electrical form, a mechanical form, or another form, and is used for information exchange between the apparatuses, the units, or the modules. The processor 1010 and the memory 1020 may operate cooperatively. In embodiments of this application, a specific connection medium among the transceiver 1030, the processor 1010, and the memory 1020 is not limited.

The communication apparatus 1000 may further include a transceiver 1030, and the communication apparatus 1000 may perform information exchange with another device by using the transceiver 1030. The transceiver 1030 may be a circuit, a bus, a transceiver, or any other apparatus that can be configured to exchange information, or is referred to as a signal transceiver unit. As shown in FIG. 10, the transceiver 1030 includes a transmitter 1031, a receiver 1032, and an antenna 1033. In addition, when the communication apparatus 1000 is a chip type apparatus or circuit, the transceiver in the communication apparatus 1000 may alternatively be an input/output circuit and/or a communication interface, and may input data (or is referred to as receiving data) and output data (or is referred to as sending data). The processor is an integrated processor, a microprocessor, or an integrated circuit, and the processor may determine output data based on input data.

In a possible implementation, the communication apparatus 1000 may be used in a sending device. Specifically, the communication apparatus 1000 may be a sending device, or may be an apparatus that can support a sending device in implementing functions of the sending device in any one of the foregoing embodiments. The memory 1020 stores a necessary computer program, a computer program or instructions, and/or data for implementing the functions of the sending device in any one of the foregoing embodiments. The processor 1010 may execute the computer program stored in the memory 1020, to complete the method performed by the sending device in any one of the foregoing embodiments. When the communication apparatus 1000 is used in a sending device, the transmitter 1031 in the communication apparatus 1000 may be configured to send to-be-transmitted bits through the antenna 1033.

In another possible implementation, the communication apparatus 1000 may be used in a receiving device. Specifically, the communication apparatus 1000 may be a receiving device, or may be an apparatus that can support a receiving device in implementing functions of the receiving device in any one of the foregoing embodiments. The memory 1020 stores a necessary computer program, a computer program or instructions, and/or data for the implementing functions of the receiving device in any one of the foregoing embodiments. The processor 1010 may execute the computer program stored in the memory 1020, to complete the method performed by the receiving device in any one of the foregoing embodiments. When the communication apparatus 1000 is used in a receiving device, the receiver 1032 in the communication apparatus 1000 may be configured to receive to-be-transmitted bits through the antenna 1033.

The communication apparatus 1000 provided in this embodiment may be used in the sending device to complete the method performed by the sending device, or may be used in the receiving device to complete the method performed by the receiving device. Therefore, for technical effects that can be achieved by this embodiment, refer to the foregoing method embodiments. Details are not described herein again.

In this embodiment of this application, the processor may be a general-purpose processor, a digital signal processor, an application-specific integrated circuit, a field programmable gate array, or another programmable logic device, a discrete gate, a transistor logic device, or a discrete hardware component, and may implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. The memory in this embodiment of this application may alternatively be a circuit or any other apparatus that can implement a storage function, and is configured to store a computer program, a computer program or instructions, and/or data.

Based on the foregoing embodiments, refer to FIG. 11. An embodiment of this application further provides another communication apparatus 1100, including: an input/output interface 1110 and a logic circuit 1120, where the input/output interface 1110 is configured to receive code instructions and transmit the code instructions to the logic circuit 1120; and the logic circuit 1120 is configured to run the code instructions to perform the method performed by the sending device or the receiving device in any one of the foregoing embodiments.

The following describes in detail an operation performed when the communication apparatus is used in the sending device or the receiving device.

In an optional implementation, the communication apparatus 1100 may be used in the sending device, to perform the foregoing method performed by the sending device, specifically, for example, the foregoing method performed by the sending device in the embodiment shown in FIG. 4. The logic circuit 1120 is configured to determine a mother code in a k^{th} transmission based on a length of to-be-transmitted bits in the k^{th} transmission, and perform systematic polar encoding on to-be-coded bits based on the mother code, to obtain the to-be-transmitted bits. The input/output interface 1110 is configured to output the to-be-transmitted bits.

In another optional implementation, the communication apparatus 1100 may be used in the receiving device, to perform the foregoing method performed by the receiving device, specifically, for example, the foregoing method performed by the receiving device in the method embodiment shown in FIG. 4. The input/output interface 1110 is configured to input to-be-transmitted bits in a k^{th} transmission from the sending device. The logic circuit 1120 is configured to decode the to-be-transmitted bits.

The communication apparatus 1100 provided in this embodiment may be used in the sending device to perform the method performed by the sending device, or may be used in the receiving device to complete the method performed by the receiving device. Therefore, for technical effects that can be achieved by this embodiment, refer to the foregoing method embodiments. Details are not described herein again.

Based on the foregoing embodiments, an embodiment of this application further provides a communication system. The system includes at least one communication apparatus used in a sending device and at least one communication apparatus used in a receiving device. For technical effects that can be achieved by this embodiment, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the sending device or the method performed by the receiving device in any one of the foregoing embodiments is implemented. The computer-readable storage medium may include: any medium that can store program code, like a USB flash drive, a removable hard disk, a read-only memory, a random access memory, a magnetic disk, or an optical disc.

Based on the foregoing embodiments, this application further provides a computing program product, including computer-executable instructions. When the computer-executable instructions are run on a computer, the method performed by the sending device or the method performed by the receiving device in any one of the foregoing embodiments is implemented.

To implement functions of the communication apparatuses in FIG. 8 and FIG. 11, an embodiment of this application further provides a chip, including a processor, configured to support the communication apparatus in implementing the functions of the sending device or the receiving device in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more procedures in the flowcharts and/or in one or more blocks in the block diagrams.

The computer program or instructions may alternatively be stored in a computer-readable memory that can instruct the computer or the another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

Apparently, a person skilled in the art may make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

## Claims

1. An encoding method, comprising:
determining, by a sending device, a mother code in a k^{th} transmission based on a length of to-be-transmitted bits in the k^{th} transmission, wherein k is an integer greater than or equal to 2;
performing, by the sending device, systematic polar encoding on to-be-coded bits in the k^{th} transmission based on the mother code, to obtain the to-be-transmitted bits; and
sending, by the sending device, the to-be-transmitted bits, wherein
when the length of the to-be-transmitted bits in the k^{th} transmission is greater than a length of non-transmitted bits in a (k-1)^{th} transmission, a location index set that is of the to-be-transmitted bits and that is in the mother code in the k^{th} transmission is determined based on a location index set srcₖ that is of source bits in the k^{th} transmission and that is in the mother code in the k^{th} transmission, a location index set frz'ₖ₋₁ that is of frozen bits in the (k-1)^{th} transmission and that is in the mother code in the k^{th} transmission, and a location index set frzₖ that is of frozen bits in the k^{th} transmission and that is in the mother code in the k^{th} transmission; or
when the length of the to-be-transmitted bits in the k^{th} transmission is less than or equal to a length of non-transmitted bits in a (k-1)^{th} transmission, a location index set that is of the to-be-transmitted bits and that is in the mother code in the k^{th} transmission is determined based on a location index set R'ₖ₋₁ that is of the non-transmitted bits in the (k-1)^{th} transmission and that is in the mother code in the k^{th} transmission.

2. The method according to claim 1, further comprising:
determining, by the sending device, a location index set that is of first bits in the (k-1)^{th} transmission and that is in the mother code in the k^{th} transmission, wherein the first bits comprise source bits, cyclic redundancy check CRC bits, and frozen bits;
performing, by the sending device, rate matching on the mother code in the k^{th} transmission, to obtain a location index set Rₖ that is of non-transmitted bits in the k^{th} transmission and that is in the mother code in the k^{th} transmission; and
determining, by the sending device, the location index set srcₖ that is of the source bits in the k^{th} transmission and that is in the mother code in the k^{th} transmission based on a location index set src'ₖ₋₁ that is of the source bits in the (k-1)^{th} transmission and that is in the mother code in the k^{th} transmission, R'ₖ₋₁, the mother code in the k^{th} transmission, a mother code in the (k-1)^{th} transmission, and Rₖ.

3. The method according to claim 2, wherein elements comprised in the location index set that is of the first bits in the (k-1)^{th} transmission and that is in the mother code in the k^{th} transmission are a sum of location indexes that are of the first bits in the (k-1)^{th} transmission and that are in the mother code in the (k-1)^{th} transmission and a length of the mother code in the (k-1)^{th} transmission.

4. The method according to claim 2 or 3, wherein the determining, by the sending device, srcₖ based on src'ₖ₋₁, R'ₖ₋₁, the mother code in the k^{th} transmission, the mother code in the (k-1)^{th} transmission, and Rₖ comprises:
determining, by the sending device, a first union set of a location index set in the mother code in the (k-1)^{th} transmission, src'ₖ₋₁, and the location index set R'ₖ₋₁ that is of the non-transmitted bits in the (k-1)^{th} transmission and that is in the mother code in the k^{th} transmission;
determining, by the sending device, a first difference set between the first union set and Rₖ;
sorting, by the sending device, location indexes in the first difference set in descending order of bit reliability; and
selecting, by the sending device, top-ranked Ns location indexes higher as srcₖ.

5. The method according to claim 4, further comprising:
using, by the sending device, a difference set between src'ₖ₋₁ and srcₖ as a location index set Δpcₖ of target parity check PC bits in the k^{th} transmission;
using, by the sending device, a union set of a location index set pc'ₖ₋₁ that is of PC bits in a first transmission to the (k-1)^{th} transmission and that is in the mother code in the k^{th} transmission and Δpcₖ as a location index set pcₖ of PC bits in the first transmission to the k^{th} transmission; and
using, by the sending device, a difference set between a location index set in the mother code in the k^{th} transmission and pcₖ, srcₖ, Rₖ, and a location index set chkₖ of CRC bits in the k^{th} transmission as frzₖ, wherein
location indexes of the to-be-transmitted bits comprise elements in Δpcₖ and in a difference set between frzₖ and frz'ₖ₋₁.

6. The method according to claim 2 or 3, wherein the determining, by the sending device, srcₖ based on src'ₖ₋₁, R'ₖ₋₁, the mother code in the k^{th} transmission, the mother code in the (k-1)^{th} transmission, and Rₖ comprises:
determining, by the sending device, a second union set of a location index set in the mother code in the (k-1)^{th} transmission and R'ₖ₋₁;
determining, by the sending device, a second difference set between the second union set and Rₖ;
sorting, by the sending device, location indexes in the second difference set in descending order of bit reliability;
selecting, by the sending device, top-ranked N_{PC} location indexes as a location index set Δsrcₖ of target source bits in the k^{th} transmission;
selecting, by the sending device, lower-ranked N_{PC} location indexes in src'ₖ₋₁ as a location index set Δpcₖ of target PC bits in the k^{th} transmission;
determining, by the sending device, a difference set between src'ₖ₋₁ and Δpcₖ; and
using, by the sending device, a union set of Δsrcₖ and the difference set between src'ₖ₋₁ and Δpcₖ as srcₖ.

7. The method according to claim 6, further comprising:
using, by the sending device, a union set of a location index set pc'ₖ₋₁ that is of PC bits in a first transmission to the (k-1)^{th} transmission and that is in the mother code in the k^{th} transmission and Δpcₖ as a location index set pcₖ of PC bits in the first transmission to the k^{th} transmission; and
using, by the sending device, a difference set between a location index set in the mother code in the k^{th} transmission and pcₖ, srcₖ, Rₖ, and a location index set chkₖ of CRC bits in the k^{th} transmission as frzₖ, wherein
location indexes of the to-be-transmitted bits comprise elements in Δpcₖ and in a difference set between frzₖ and frz'ₖ₋₁.

8. The method according to any one of claims 2 to 7, wherein the rate matching comprises shortening or puncturing.

9. The method according to claim 6 or 7, wherein a value of a bit corresponding to an element in Δsrcₖ is the same as a value of a bit corresponding to an element in Δpcₖ.

10. A decoding method, comprising:
receiving, by a receiving device, to-be-transmitted bits in a k^{th} transmission from a sending device; and
decoding, by the receiving device, the to-be-transmitted bits, wherein
when a length of the to-be-transmitted bits in the k^{th} transmission is greater than a length of non-transmitted bits in a (k-1)^{th} transmission, a location index set that is of the to-be-transmitted bits and that is in a mother code in the k^{th} transmission is determined based on a location index set srcₖ that is of source bits in the k^{th} transmission and that is in the mother code in the k^{th} transmission, a location index set frz'ₖ₋₁ that is of frozen bits in the (k-1)^{th} transmission and that is in the mother code in the k^{th} transmission, and a location index set frzₖ that is of frozen bits in the k^{th} transmission and that is in the mother code in the k^{th} transmission; or
when a length of the to-be-transmitted bits in the k^{th} transmission is less than or equal to a length of non-transmitted bits in a (k-1)^{th} transmission, a location index set that is of the to-be-transmitted bits and that is in a mother code in the k^{th} transmission is determined based on a location index set R'ₖ₋₁ that is of the non-transmitted bits in the (k-1)^{th} transmission and that is in the mother code in the k^{th} transmission.

11. The method according to any one of claims 1 to 10, wherein when the length of the to-be-transmitted bits in the k^{th} transmission is less than or equal to the length of the non-transmitted bits in the (k-1)^{th} transmission, elements in the location index set that is of the to-be-transmitted bits and that is in the mother code in the k^{th} transmission comprise elements in R'ₖ₋₁.

12. A communication apparatus, comprising a processing unit and a transceiver unit, wherein the processing unit is configured to determine a mother code in a k^{th} transmission based on a length of to-be-transmitted bits in the k^{th} transmission, wherein k is an integer greater than or equal to 2;
the processing unit is further configured to perform systematic polar encoding on to-be-coded bits in the k^{th} transmission based on the mother code, to obtain the to-be-transmitted bits; and
the transceiver unit is configured to send the to-be-transmitted bits, wherein
when the length of the to-be-transmitted bits in the k^{th} transmission is greater than a length of non-transmitted bits in a (k-1)^{th} transmission, a location index set that is of the to-be-transmitted bits and that is in the mother code in the k^{th} transmission is determined based on a location index set srcₖ that is of source bits in the k^{th} transmission and that is in the mother code in the k^{th} transmission, a location index set frz'ₖ₋₁ that is of frozen bits in the (k-1)^{th} transmission and that is in the mother code in the k^{th} transmission, and a location index set frzₖ that is of frozen bits in the k^{th} transmission and that is in the mother code in the k^{th} transmission; or
when the length of the to-be-transmitted bits in the k^{th} transmission is less than or equal to a length of non-transmitted bits in a (k-1)^{th} transmission, a location index set that is of the to-be-transmitted bits and that is in the mother code in the k^{th} transmission is determined based on a location index set R'ₖ₋₁ that is of the non-transmitted bits in the (k-1)^{th} transmission and that is in the mother code in the k^{th} transmission.

13. The apparatus according to claim 12, wherein the processing unit is further configured to:
determine a location index set that is of first bits in the (k-1)^{th} transmission and that is in the mother code in the k^{th} transmission, wherein the first bits comprise source bits, cyclic redundancy check CRC bits, and frozen bits;
perform rate matching on the mother code in the k^{th} transmission, to obtain a location index set Rₖ that is of non-transmitted bits in the k^{th} transmission and that is in the mother code in the k^{th} transmission; and
determine the location index set srcₖ that is of the source bits in the k^{th} transmission and that is in the mother code in the k^{th} transmission based on a location index set src'ₖ₋₁ that is of the source bits in the (k-1)^{th} transmission and that is in the mother code in the k^{th} transmission, R'ₖ₋₁, the mother code in the k^{th} transmission, a mother code in the (k-1)^{th} transmission, and Rₖ.

14. The apparatus according to claim 13, wherein elements comprised in the location index set that is of the first bits in the (k-1)^{th} transmission and that is in the mother code in the k^{th} transmission are a sum of location indexes that are of the first bits in the (k-1)^{th} transmission and that are in the mother code in the (k-1)^{th} transmission and a length of the mother code in the (k-1)^{th} transmission.

15. The apparatus according to claim 13 or 14, wherein when determining srcₖ based on src'ₖ₋₁, R'ₖ₋₁, the mother code in the k^{th} transmission, the mother code in the (k-1)^{th} transmission, and Rₖ, the processing unit is specifically configured to:
determine a first union set of a location index set in the mother code in the (k-1)^{th} transmission, src'ₖ₋₁, and the location index set R'ₖ₋₁ that is of the non-transmitted bits in the (k-1)^{th} transmission and that is in the mother code in the k^{th} transmission;
determine a first difference set between the first union set and Rₖ;
sort location indexes in the first difference set in descending order of bit reliability; and
select top-ranked Ns location indexes as srcₖ.

16. The apparatus according to claim 15, wherein the processing unit is further configured to:
use a difference set between src'ₖ₋₁ and srcₖ as a location index set Δpcₖ of target parity check PC bits in the k^{th} transmission;
use a union set of a location index set pc'ₖ₋₁ that is of PC bits in a first transmission to the (k-1)^{th} transmission and that is in the mother code in the k^{th} transmission and Δpcₖ as a location index set pcₖ of PC bits in the first transmission to the k^{th} transmission; and
use a difference set between a location index set in the mother code in the k^{th} transmission and pcₖ, srcₖ, Rₖ, and a location index set chkₖ of CRC bits in the k^{th} transmission as frzₖ, wherein
location indexes of the to-be-transmitted bits comprise elements in Δpcₖ and in a difference set between frzₖ and frz'ₖ₋₁.

17. The apparatus according to claim 13 or 14, wherein when determining srcₖ based on src'ₖ₋₁, R'ₖ₋₁, the mother code in the k^{th} transmission, the mother code in the (k-1)^{th} transmission, and Rₖ, the processing unit is specifically configured to:
determine a second union set of a location index set in the mother code in the (k-1)^{th} transmission and R'ₖ₋₁;
determine a second difference set between the second union set and Rₖ;
sort location indexes in the second difference set in descending order of bit reliability;
select top-ranked N_{PC} location indexes as a location index set Δsrcₖ of target source bits in the k^{th} transmission;
select lower-ranked N_{PC} location indexes in src'ₖ₋₁ as a location index set Δpcₖ of target PC bits in the k^{th} transmission;
determine a difference set between src'ₖ₋₁ and Δpcₖ; and
use a union set of Δsrcₖ and the difference set between src'ₖ₋₁ and Δpcₖ as srcₖ.

18. The apparatus according to claim 17, wherein the processing unit is further configured to:
use a union set of a location index set pc'ₖ₋₁ that is of PC bits in a first transmission to the (k-1)^{th} transmission and that is in the mother code in the k^{th} transmission and Δpcₖ as a location index set pcₖ of PC bits in the first transmission to the k^{th} transmission; and
use a difference set between a location index set in the mother code in the k^{th} transmission and pcₖ, srcₖ, Rₖ, and a location index set chkₖ of CRC bits in the k^{th} transmission as frzₖ, wherein
location indexes of the to-be-transmitted bits comprise elements in Δpcₖ and in a difference set between frzₖ and frz'ₖ₋₁.

19. The apparatus according to any one of claims 13 to 18, wherein the rate matching comprises shortening or puncturing.

20. The apparatus according to claim 17 or 18, wherein a value of a bit corresponding to an element in Δsrcₖ is the same as a value of a bit corresponding to an element in Δpcₖ.

21. A communication apparatus, comprising:
a transceiver unit, configured to receive to-be-transmitted bits in a k^{th} transmission from a sending device; and
a processing unit, configured to decode the to-be-transmitted bits, wherein
when a length of the to-be-transmitted bits in the k^{th} transmission is greater than a length of non-transmitted bits in a (k-1)^{th} transmission, a location index set that is of the to-be-transmitted bits and that is in a mother code in the k^{th} transmission is determined based on a location index set srcₖ that is of source bits in the k^{th} transmission and that is in the mother code in the k^{th} transmission, a location index set frz'ₖ₋₁ that is of frozen bits in the (k-1)^{th} transmission and that is in the mother code in the k^{th} transmission, and a location index set frzₖ that is of frozen bits in the k^{th} transmission and that is in the mother code in the k^{th} transmission; or
when a length of the to-be-transmitted bits in the k^{th} transmission is less than or equal to a length of non-transmitted bits in a (k-1)^{th} transmission, a location index set that is of the to-be-transmitted bits and that is in a mother code in the k^{th} transmission is determined based on a location index set R'ₖ₋₁ that is of the non-transmitted bits in the (k-1)^{th} transmission and that is in the mother code in the k^{th} transmission.

22. The apparatus according to any one of claims 12 to 21, wherein when the length of the to-be-transmitted bits in the k^{th} transmission is less than or equal to the length of the non-transmitted bits in the (k-1)^{th} transmission, elements in the location index set that is of the to-be-transmitted bits and that is in the mother code in the k^{th} transmission comprise elements in R'ₖ₋₁.

23. A communication apparatus, comprising at least one processor, wherein the at least one processor is coupled to a memory; and
the at least one processor is configured to execute a computer program or instructions stored in the memory, to implement the method according to any one of claims 1 to 9 and 11, or implement the method according to claim 10 or 11.

24. A communication apparatus, comprising a logic circuit and an input/output interface, wherein
the logic circuit is configured to determine a mother code in a k^{th} transmission based on a length of to-be-transmitted bits in the k^{th} transmission, wherein k is an integer greater than or equal to 2;
the logic circuit is further configured to perform systematic polar encoding on to-be-coded bits in the k^{th} transmission based on the mother code, to obtain the to-be-transmitted bits; and
the input/output interface is configured to output the to-be-transmitted bits, wherein
when the length of the to-be-transmitted bits in the k^{th} transmission is greater than a length of non-transmitted bits in a (k-1)^{th} transmission, a location index set that is of the to-be-transmitted bits and that is in the mother code in the k^{th} transmission is determined based on a location index set srcₖ that is of source bits in the k^{th} transmission and that is in the mother code in the k^{th} transmission, a location index set frz'ₖ₋₁ that is of frozen bits in the (k-1)^{th} transmission and that is in the mother code in the k^{th} transmission, and a location index set frzₖ that is of frozen bits in the k^{th} transmission and that is in the mother code in the k^{th} transmission; or
when the length of the to-be-transmitted bits in the k^{th} transmission is less than or equal to a length of non-transmitted bits in a (k-1)^{th} transmission, a location index set that is of the to-be-transmitted bits and that is in the mother code in the k^{th} transmission is determined based on a location index set R'ₖ₋₁ that is of the non-transmitted bits in the (k-1)^{th} transmission and that is in the mother code in the k^{th} transmission.

25. A communication apparatus, comprising a logic circuit and an input/output interface, wherein
the input/output interface is configured to input to-be-transmitted bits in a k^{th} transmission from a sending device; and
the logic circuit is configured to decode the to-be-transmitted bits, wherein
when a length of the to-be-transmitted bits in the k^{th} transmission is greater than a length of non-transmitted bits in a (k-1)^{th} transmission, a location index set that is of the to-be-transmitted bits and that is in a mother code in the k^{th} transmission is determined based on a location index set srcₖ that is of source bits in the k^{th} transmission and that is in the mother code in the k^{th} transmission, a location index set frz'ₖ₋₁ that is of frozen bits in the (k-1)^{th} transmission and that is in the mother code in the k^{th} transmission, and a location index set frzₖ that is of frozen bits in the k^{th} transmission and that is in the mother code in the k^{th} transmission; or
when a length of the to-be-transmitted bits in the k^{th} transmission is less than or equal to a length of non-transmitted bits in a (k-1)^{th} transmission, a location index set that is of the to-be-transmitted bits and that is in a mother code in the k^{th} transmission is determined based on a location index set R'ₖ₋₁ that is of the non-transmitted bits in the (k-1)^{th} transmission and that is in the mother code in the k^{th} transmission.

26. A computer-readable storage medium, wherein the computer-readable storage medium stores a computer program or instructions, and when the computer program or the instructions are run on a computer, the method according to any one of claims 1 to 9 and 11 or the method according to claim 10 or 11 is implemented.

27. A computer program product, comprising computer-executable instructions, wherein when the computer-executable instructions are run on a computer, the computer is enabled to perform the method according to any one of claims 1 to 9 and 11 or the method according to claim 10 or 11.

28. A communication system, comprising the apparatus according to any one of claims 12 to 20 and 22, and comprising the apparatus according to claim 21 or 22.
